# EUROPEAN PATENT SPECIFICATION

(11) **EP 0 813 740 B1**
(45) Date of publication and mention of the grant of the patent: **26.08.1998**
(21) Application number: 96903464.4
(22) Date of filing: 11.01.1996
(51) Int. Cl.: G11B 27/24, B32B 27/08

(54) **REDUCED SOLVENT ANTISTATIC HARD COAT**
ANTISTATIKHARTSCHICHT
REVETEMENT ANTISTATIQUE DUR NECESSITANT MOINS DE SOLVANT

(30) Priority: 08.02.1995 US 385326
(43) Date of publication of application: 29.12.1997
(73) Proprietor: Imation Corp (a Delaware Corporation), Oakdale, MN 55128 (US)
(72) Inventor: HA, Chau, T., Saint Paul, MN 55133-3427 (US); INVIE, Judith, M., Saint Paul, MN 55133-3427 (US); LAMANNA, William, M., Saint Paul, MN 55133-3427 (US)
(74) Representative: Werner, Hans-Karsten, Dr.Dipl.-Chem.
(86) International application number: US9600442
(87) International publication number: WO9624929

(56) References cited:
- WO-A-93/26002
- DE-A- 4 222 448

## Description

### FIELD OF THE INVENTION

The present invention relates generally to the use of antistatic hard coat compositions, such as for use on optical media, and more specifically to antistatic hard coat compositions comprising a fluorinated ionic salt.

### BACKGROUND OF THE INVENTION

Optical recording media typically comprise an optical recording layer provided on a substrate. For media such as magneto optic recording media and WORM (write-once-read-many) optical recording media, the optical recording layer generally contains a thin film rare earth transition metal alloy such as gadolinium-cobalt (Gd-Co), gadolinium-iron (Gd-Fe), terbium-iron (Tb-Fe), dysprosium-iron (Dy-Fe), Gd-Tb-Fe, Tb-Dy-Fe, Tb-Fe-Co, terbium-iron-chromium (Tb-Fe-Cr), gadolinium-iron-bismuth (Gd-Fe-Bi), Gd-Co-Bi, gadolinium-iron-tin (Gd-Fe-Sn), Gd-Fe-Co, Gd-Co-Bi, or Gd-Dy-Fe. Such alloys are described, for example, in U.S. Pat. No. 4,822,675. For media such as compact disks, the optical recording layer may be a layer of reflective material, for example an aluminum or aluminum alloy, having a patterned, information-bearing surface.

Many of the materials which are suitable for the optical recording layer of optical disks react strongly with oxygen and other elements which may be present in the environment in which optical recording media are used. Furthermore, the substrate itself may contain impurities which react with the optical recording layer. Thus, transparent dielectric films may be deposited on one or both sides of the optical recording layer to protect it. Such dielectric films are described, for example, in U.S. Pat. Nos. 4,833,043 and 4,917,970.

Optionally a reflective layer may be incorporated into optical recording media so that incident light that passes through the optical recording layer a first time is reflected and passes back through the optical recording layer a second time. Such reflection increases the magneto optic rotation of incident light because the so-called Faraday effect is added to the so-called Kerr effect.

The reflective layer may be incorporated into a magnetic recording medium such that the optical recording layer is interposed between the substrate and the reflective layer. For such media, transparent substrates are used so that incident light passes first through the substrate, then passes through the optical recording layer, and then is reflected by the reflective layer back through the optical recording layer. Such media are known as substrate incident media. Alternatively, when the optional reflective layer is disposed between the substrate and the optical recording layer, the read and write beams will not be directed through the substrate. Such a medium is known as an air incident medium, although generally there is at least one layer between the optical recording layer and the air.

For substrate incident media, the substrate is typically formed from polycarbonate. Polycarbonate substrates have excellent rigidity, dimensional stability, transparency, and impact strength, but unfortunately have poor abrasion resistance. Consequently, polycarbonate substrates are susceptible to physical damage from scratches, abrading, and the like.

To protect the substrate from physical damage, a "hard coat" layer is coated onto the substrate to form a protective barrier between the substrate and the air. For example, Japanese Kokai No. JP02-260145 describes a hard coat layer that is coated onto the substrate of an optical card. The hard coat layer is formed from an electron-beam or ultraviolet radiation-curable resin.

The hard coat layers may incorporate useful ingredients into the composition. For example, the hard coat layer of Japanese Kokai No. JP02-260145 also includes a surface slipping agent, i.e., a lubricant.

Another example is the use of antistatic agents incorporated into the hard coat composition. Static charge build-up attracts dust to the hard coat layer of optical recording media. Dust can prevent read and write beams from reaching the optical recording layer during writing or reading and thereby cause data errors which reduce the usefulness of the optical recording media. Thus, it is generally desirable to incorporate antistatic agents such as ionic salts into the hard coat layer in order to reduce this static charge build-up and prevent the attendant dust attraction and data errors from occurring.

Antistatic hard coat compositions must satisfy stringent requirements in order to be suitable for use in optical recording media. In addition to providing protection against the build-up of static charge, cured antistatic hard coat layers must be transparent, abrasion resistant, and compositionally stable so that the compositions remain transparent for long periods of time. If the compositions become hazy, the amount of incident light that reaches the optical recording layer may be reduced, thus causing an increase in bit error rate or error in the read/write cycles.

Another requirement of antistatic hard coat compositions concerns the viscosity of the uncured antistatic composition. Typically, the cured antistatic hard coat is produced from an uncured admixture of ingredients which are first coated onto the optical recording media substrate, then cured. One method of applying antistatic hard coats to polycarbonate substrates is by a spin coating technique. The spin coating technique requires that the viscosity of the uncured antistatic hard coat admixture be relatively low. For instance, to obtain an antistatic hard coat layer of uniform thickness by the spin coating technique, the antistatic composition preferably must have low viscosity, e.g., 100 centipoise or less at 25 C. The ingredients of conventional hard coat compositions, however, may exhibit a relatively higher molecular weight and surface tension. This combination of properties causes admixtures of conventional hard coat compositions to be too viscous to spin coat. One method by which the viscosity of these admixtures can be reduced is by adding a solvent to the admixture. Solvents are generally disfavored because of their negative health and environmental effects.

### SUMMARY OF THE INVENTION

The present inventors have found that certain fluorinated ionic salts very effectively dissipate static charge when included in a layer coated onto a substrate. These fluorinated ionic salts have proven to be especially effective when used with certain classes of nonionic surfactants. The present inventors have further discovered that these fluorinated ionic salts can be incorporated into hard coat formulations that have superior antistatic and physical properties, and that can be coated without needing to be further diluted with solvents.

An aspect of the present invention is an optical recording disk having a hard coat layer provided on at least one surface of the disk, wherein the hard coat layer comprises a fluorinated ionic salt of the general formula: 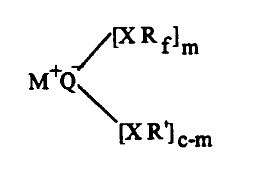 wherein M⁺ represents a cation, Q represents a carbon atom, a nitrogen atom, or an oxygen atom; each X independently represents a divalent linking group, R_{f} represents a fluorinated group; R' represents a monovalent organic group; and when Q is carbon, c is 3 and m is 1 or 2 or 3, when Q is nitrogen, c is 2 and m is 1 or 2; and when Q is oxygen, c is 1 and m is 1.

A further aspect of the present invention is an optical recording disk having a hard coat layer provided on at least one surface of the disk, wherein the hard coat layer is a cured composition obtained from ingredients comprising a fluorinated ionic salt; a radiation-curable component; a nonionic fluorinated surfactant; and a radiation-curable silicone-containing compound. Preferably, the radiation-curable component comprises a (meth)acrylate-functional diluent; a multi-functional (meth)acrylate monomer comprising three or more (meth)acrylate groups; and a multi-functional (meth)acrylate oligomer.

Yet a further aspect of the present invention is a cured antistatic coating obtained from ingredients comprising a fluorinated ionic salt; a radiation-curable component; a nonionic surfactant; and a radiation-curable silicone-containing compound. Preferably, the radiation-curable component comprises a (meth)acrylate-functional diluent; a multi-functional (meth)acrylate monomer comprising three or more (meth)acrylate groups; and a multi-functional (meth)acrylate oligomer.

### BRIEF DESCRIPTION OF THE DRAWING

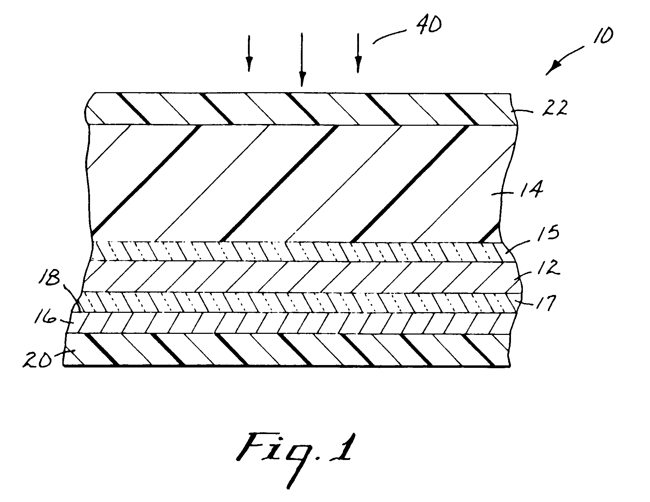

Figure 1 is a schematic cross-section of a magneto optic recording medium comprising an antistatic hard coat of the present invention.

### DESCRIPTION OF THE PREFERRED EMBODIMENTS OF THE INVENTION

Figure 1 shows a greatly enlarged schematic cross-section through a portion of an illustrative substrate incident magneto optic ("MO") recording disk **10** of the present invention. It is to be understood, however, that the antistatic compositions of the present invention are not limited solely to use on MO media, but rather are suitable for use on a wide variety of materials. For example, in addition to being used with MO disks, the antistatic compositions of the present invention are particularly suitable for use with other kinds of optical recording media such as compact disks, CD-ROM, CD-R, WORM (i.e., write-once-read-many) media, and the like. Further, the invention may be useful in many other coating applications, including those where the dissipation of static charge is important.

Referring now to figure 1, an optical recording layer **12** is provided on a transparent substrate **14**. A film **16** having a reflective surface **18** is disposed to reflect incident light **40** which will have been transmitted through the optical recording layer **12** a first time back through the optical recording layer **12** a second time. A protective sealcoat **20** is disposed over the film **16** to protect the film **16** and reflective surface **18** from the environment. Optionally, transparent dielectric layers **15** and **17** may be disposed on one or both sides of the optical recording layer **12**. As is known in the art, such dielectric layers enhance the optical signal from the optical recording layer **12** and also protect the optical recording layer **12** from oxidation or corrosion due to heat, humidity, or chemical reactions with impurities, such as moisture. A hard coat layer **22** of the present invention is provided over the substrate **14** to protect the substrate **14** from physical damage.

The substrate **14**, optical recording layer **12**, film **16**, protective sealcoat **20**, and the dielectric layers **15** and **17** can be of a type known in the art. However, the substrate **14** is preferably formed from polycarbonate because the antistatic compositions of the present invention show excellent adhesion to polycarbonate substrates.

The cured hard coat layer **22** is a cured composition obtained from ingredients comprising a fluorinated ionic salt, a radiation-curable component, a nonionic fluorinated surfactant, and a radiation-curable silicone-containing compound.

In the practice of the present invention, useful fluorinated ionic salts improve the conductivity of a cured antistatic hard coat thereby preventing the accumulation of static charge buildup. A wide variety of fluorinated ionic salts could be used. U.S. Pat. No. 5,176,943 (Woo), at column 6 (incorporated herein by reference), describes some examples of the fluorinated ionic salts that can be used in this invention.

One class of preferred fluorinated ionic salt is the class generally described by formula I 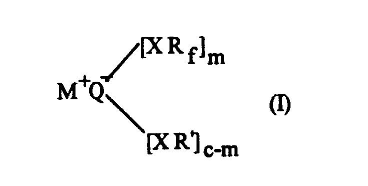 wherein M⁺ represents a cation such as, for example, Na⁺, Li⁺, K⁺, H⁺, RₓNH₄₋ₓ ⁺, Ca²⁺, Zn²⁺, etc., preferably Li⁺; Q represents either a carbon atom, a nitrogen atom, or an oxygen atom; each X independently represents divalent linking groups, preferably a sulfonyl group (-SO₂-) or a carbonyl group (-C(O)-); c represents an integer equal to one less than the valency of the Q atom; and m is from 1 to c. Specifically, when Q is an oxygen atom having a valency 2, c is 1 and m is 1. When Q is a nitrogen atom having a valency 3, c is 2 and m is 1 or 2. When Q is a carbon atom having a valency 4, c is 3 and m is 1, 2, or 3.

In formula I, R' is generally a monovalent organic group, preferably an alkyl or aryl moiety. Examples of preferred R' groups include but are not limited to halogen-substituted alkyl and aryl groups. Where R' contains more than one carbon atom in a skeletal chain, the skeletal chain may contain heteroatoms such as N, O, and S interrupting the skeletal carbon chain. Where m is equal to c a fluorinated ionic salt will have no X-R' group. Also, the R' and R_{f} groups may be linked to form a cyclic molecule.

R_{f} in formula I is a monovalent, fluorinated, moiety that contains at least one carbon atom. Where R_{f} contains more than one carbon atom in a skeletal chain, the chain may be branched or cyclic, but is preferably straight and may be saturated or unsaturated. The chain of carbon atoms may be interrupted by heteroatoms or radicals, such as oxygen, sulfur, or nitrogen atoms. Preferably, where such heteroatoms are present, the skeletal chain does not contain more than one heteroatom for every two carbon atoms. An occasional carbon-bonded hydrogen atom, bromine atom, or chlorine atom may be present; where present, however, these atoms preferably are present not more than once for every two carbon atoms. R_{f} is preferably perfluorinated.

The total number of carbon atoms in R_{f} can vary and can be, for example, from 1 to 18, and is preferably from 1 to 8. Where R_{f} is or contains a cyclic structure, such structure preferably has 5 or 6 ring members, one or two of which can be heteroatoms, e.g., oxygen and/or nitrogen. The R_{f} group is also preferably saturated, e.g., free of ethylenic or other carbon-to-carbon unsaturation. Examples of R_{f} groups are fluorinated alkyl, e.g., CF₃-, and alkyloxyalkyl, e.g., CF₃OCF₂-, preferred R_{f} moieties are perfluorinated, straight chain aliphatic moieties containing only carbon and fluorine atoms and having from 1 to 8 carbon atoms. In those instances wherein the fluorinated ionic salt of formula I contains more than one R_{f} moiety, such R_{f} moieties can be the same or different, and optionally can be linked to form a cyclic molecule.

While not wishing to be bound by theory, fluorinated ionic salts described by formula I are believed to be effective within antistatic hard coat compositions because these salts are believed to form complexes with the polyoxyethylene segments of the nonionic fluorinated surfactants preferred in the practice of the present invention. It is further postulated that in order to minimize interfacial tension, the fluorinated segment of the nonionic fluorinated surfactant migrates to and orients itself at the coating surface or air interface, causing the entire nonionic fluorinated surfactant/fluorinated ionic salt complex to be located at the surface of the coating. The result is enrichment of the coating surface by the fluorinated ionic salt. By being concentrated at the surface of the antistatic hard coat layer, the conductive fluorinated ionic salt acts very effectively as an antistatic agent to dissipate electrostatic charge.

Preferred fluorinated ionic salts according to formula I include, e.g., (perfluoroalkyl sulfonyl) imide salts, (perfluoroalkyl sulfonyl) methide salts, and perfluoroalkylsulfonate salts. Perfluoroalkyl sulfonyl imide salts can be described by the general formula 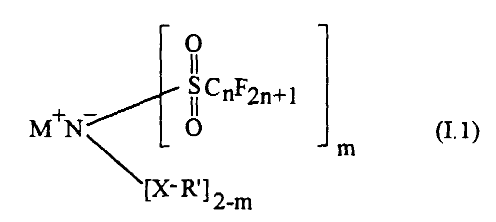 where m is 1 or 2, preferably 2, n is in the range from about 1 to 12, preferably from about 1 to 8, M, and R' are as defined above; X is preferably -SO₂- or -C(O)-, most preferably -SO₂-.

Perfluoroalkyl sulfonyl methide salts are described by the general formula 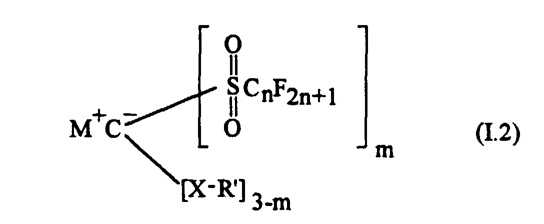 where m is 1 or 2 or 3, preferably 3, n is in the range from about 1 to 12, preferably from about 1 to 8, M, and R' are as defined above; X is preferably -SO₂- or -C(O)-, most preferably -SO₂-.

Perfluoroalkylsulfonate salts can be described by the general formula

M⁺ O⁻SO₂R_{f} (I.3)

M is as defined above. Preferably R_{f} has the general formula CₙF₂ₙ₊₁, wherein n is preferably in the range from 1 to 8, most preferably 1 to 4.

A specific example of formula I.1 is bis-perfluoroalkylsulfonyl imide salts; especially preferred is lithium bis-(trifluoromethylsulfonyl)imide: 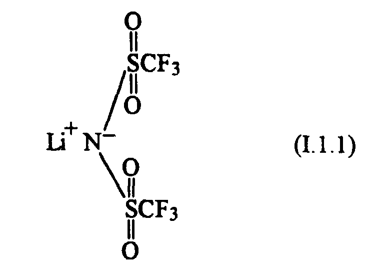 available from 3M Corp. under the trade name Fluorad HQ-115. Processes generally useful for the synthesis of fluorochemical imide salts and their conjugate acids are described in the following references: U.S. Pat. No. 4,505,997 (Armand et al.); U.S. Pat. No. 5,072,040 (Armand); Darryl D. DesMarteau, Chemistry of Perfluoromethylsulfonyl Perfluorobutylsulfonyl Imide, Inorg. Chem. 29 2982-85 (1990); and Darryl D. DesMarteau, Synthesis, Properties, and Reactions of Bis((trifluoromethyl)sulfonyl) Imide, Inorg. Chem. 23, 372-23 (1984).

A specific example of formula I.2 is tris-(perfluoroalkylsulfonyl) methide salts; especially preferred is lithium tris-(trifluoromethylsulfonyl) methide: 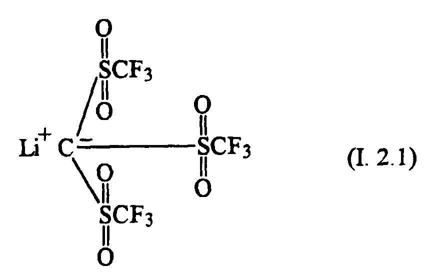 Processes useful for the synthesis of fluorochemical methide salts and their conjugate acids are described in U.S. Pat. No. 5,273,840 (Dominey) and in Turowsky & Seppelt, Inorg. Chem., 27, 2135-37 (1988).

A specific example of formula I.3 is lithium trifluoromethanesulfonate: 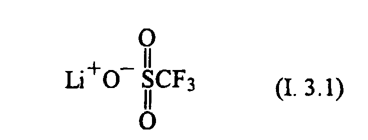 commercially available from 3M Corp. under the trade name Fluorad FC-122.

Cyclic analogs of the salts according to formulas I.1 and I.2 are also useful, for example 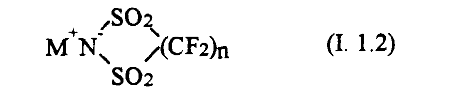 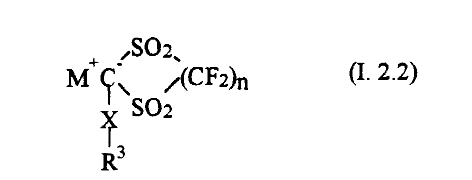 wherein n is in the range from about 1 to 5, preferably from about 2 to 3, and R³ is an alkyl or aryl moiety that can be halogenated and/or functionalized, and is preferably a perfluoroalkyl group. X is preferably either -C(O)- or -(SO₂)- as previously defined.

The uncured hard coat admixture of the present invention comprises a radiation-curable component; that is, a component that cures upon exposure to radiation (e.g., ultraviolet radiation, electron beam radiation, etc.). Preferably, the radiation-curable component is UV-curable.

Useful radiation-curable components must be capable of being combined with the other components of the present invention to provide an uncured antistatic hard coat admixture that provides good wetting and flow characteristics, that allows for a relatively fast cure, and that has a viscosity sufficiently low to be spin coated. For example, the viscosity of an admixture comprising a fluorinated ionic salt, a radiation-curable component, a nonionic perfluoro surfactant, and a radiation-curable silicone-containing compound is preferably no higher than about 100 centipoise at a temperature of 25 C. If the viscosity of the admixture is too high, the admixture may be unsuitable for use with the spin coating techniques which are most desirably used to apply the uncured antistatic hard coat composition to an optical recording media substrate prior to curing. These uncured radiation-curable materials must also, upon being cured, provide abrasion resistance and good adhesion to both polycarbonate and aluminum surfaces.

The radiation-curable component of the present invention can be comprised of one or more monomeric and/or oligomeric radiation-curable components. Each monomeric or oligomeric component may comprise one or more reactive vinyl unsaturated moiety that will polymerize upon being exposed to suitable radiation. Generally, radiation-curable components suitable for the practice of the present invention include (meth)acrylate functional monomers and oligomers having the general formula 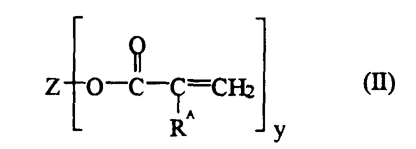 wherein R^{A} is preferably hydrogen or CH₃, and y is preferably in the range from about 1 to 6. The precise nature of Z is not critical, however Z has a valency y. Representative Z groups include those that comprise, for example, urethanes, polyurethanes, esters, polyesters, oxyalkylene groups, epoxies, alkyl groups, aryl-containing groups, and allyl-containing groups, etc., any of which can be straight, branched, cyclic, aromatic, saturated, or unsaturated.

Preferably, the radiation-curable component of the present invention comprises a (meth)acrylate-functional diluent, a multi-functional (meth)acrylate monomer comprising three or more (meth)acrylate groups, and a multi-functional (meth)acrylate oligomer.

For the purposes of the present invention, (meth)acrylate-functional diluents, also referred to herein as "reactive diluents," are relatively low molecular weight mono- or di-functional, non-aromatic, (meth)acrylate monomers; i.e., y in formula II equals 1 or 2. These relatively low molecular weight reactive diluents are advantageously of a relatively low viscosity, e.g., less than about 30 centipoise (cps) at 25C. Di-functional, non-aromatic (meth)acrylates are generally preferred over mono-functional non-aromatic (meth)acrylates because di-functional non-aromatic (meth)acrylates allow for quicker cure time. Preferred reactive diluents include 1,6-hexanediol di(meth)acrylate (HDODA from UCB Radcure, Inc. of Smyrna, Georgia), tripropylene glycol di(meth)acrylate, isobornyl (meth)acrylate (IBOA, Radcure), 2(2-ethoxyethoxy) ethyl (meth)acrylate (sold under the trade name Sartomer 256 from SARTOMER Company, Inc. of Exton, Pennsylvania), n-vinyl formamide (Sartomer 497), tetrahydrofurfuryl (meth)acrylate (Sartomer 285), polyethylene glycol di(meth)acrylate (Sartomer 344), tripropylene glycol di(meth)acrylate (Radcure), neopentyl glycol dialkoxy di(meth)acrylate, polyethyleneglycol di(meth)acrylate, and mixtures thereof.

Another radiation-curable component useful in the practice of the present invention is the class of multifunctional (meth)acrylate monomers comprising three or more (meth)acrylate groups; i.e., where y in formula II is 3 or greater. Multifunctional (meth)acrylate monomers are useful in the practice of the present invention because they add abrasion resistance to the hard coat layer. Preferred multifunctional (meth)acrylate monomers comprising three or more (meth)acrylate groups include trimethylol propane tri(meth)acrylate (TMPTA), pentaerythritol tri(meth)acrylate, pentaerythritol tetra(meth)acrylate, ditrimethylolpropane tri(meth)acrylate (Sartomer 355), dipentaerythritol penta(meth)acrylate (Sartomer 399), dipentaerythritol hydroxy penta(meth)acrylate (DPHPA), glyceryl propoxy tri(meth)acrylate, trimethyllopropane tri(meth)acrylate, and mixtures thereof.

Another useful radiation-curable component of the present invention is the class of multifunctional (meth)acrylate oligomers, having two or more (meth)acrylate groups, and having an average molecular weight (Mw) in the range from about 400 to 2000. Preferred multi-functional (meth)acrylate oligomers include polyester (meth)acrylates, polyurethane (meth)acrylates, and (meth)acrylated epoxy (meth)acrylates. (Meth)acrylated epoxy (meth)acrylates and polyester(meth)acrylates are most preferred because they tend to have a relatively low viscosity and therefore allow a more uniform layer to be applied by the spin coating method. Specifically, preferred multifunctional (meth)acrylate oligomers include those commercially available from UCB Radcure, Inc. of Smyrna, Georgia and sold under the trade name Ebecryl (Eb): Eb40 (tetrafunctional acrylated polyester oligomer), Eb80 (polyester tetra-functional (meth)acrylate oligomer), Eb81(multifunctional (meth)acrylated polyester oligomer), Eb600 (bisphenol A epoxy di(meth)acrylate), Eb605 (bisphenol A epoxy di(meth)acrylate diluted with 25% tripropylene glycol di(meth)acrylate), Eb639 (novolac polyester oligomer), Eb2047 (trifunctional acrylated polyester oligomer), Eb3500 (di-functional Bisphenol-A oligomer acrylate), Eb3604 (multi-functional polyester oligomer acrylate), Eb6602 (trifunctional aromatic urethane acrylate oligomer), Eb8301 (hexafunctional aliphatic urethane acrylate), Eb8402 (difunctional aliphatic urethane acrylate oligomer), and mixtures thereof. Of these, the most preferred are, Eb 600, Eb605, Eb80, and Eb81.

Most preferably the radiation-curable component of the present invention comprises multiple radiation-curable components. (Meth)acrylate-functional diluents are preferably present in the radiation-curable component in amounts ranging from about 20 to 60 parts by weight (pbw), based on 100 pbw of radiation-curable material. Multifunctional (meth)acrylate monomers are preferably present in amounts ranging from about 25 to 55 pbw, based on 100 pbw of total radiation-curable component. And, multifunctional (meth)acrylate oligomers, preferably having a molecular weight in the range from 400 to 2000 are preferably present in the radiation-curable component of the present invention in an amount in the range from about 10 to 30 parts by weight, based on 100 parts of radiation-curable component.

Nonionic surfactants useful in the practice of the present invention can be any monomer, oligomer, polymer, or copolymer will facilitate uniform coating of the hard coat composition. Preferably the nonionic surfactant comprises a fluorinated group, and most preferably the nonionic surfactant comprises a perfluorinated group.

One class of preferred nonionic fluorinated surfactants are those that comprise a polyoxyalkylene segment. Of these; especially preferred are those that comprise polyoxyethylene segments. As is explained above, nonionic fluorinated surfactants which comprise a polyoxyethylene segment are believed to be effective within antistatic hard coat compositions because the polyoxyethylene segments of these compounds are believed to form complexes with preferred fluorinated ionic salts. The fluorinated segment of the nonionic fluorinated surfactant migrates to and orients itself at the coating surface or air interface, bringing to the surface the ionic portion of the fluorinated ionic salt with which it has formed a complex. The fluorinated ionic salt, by being concentrated at the surface of the antistatic hard coat layer, acts very effectively as an antistatic agent to dissipate electrostatic charge.

Nonionic perfluoro surfactants comprising a polyoxyalkylene segment, e.g., polyoxymethylene, polyoxyethylene, polyoxypropylene, etc., preferred in the practice of the present invention, can be represented by one or both of the following general formulas:

R⁵(C_{y}H_{2y}O)ₓR⁶ (III.a)

R⁵O(C_{y}H_{2y}O)ₓR⁶ (III.b)

wherein each y is independently in the range from 1 to 20, preferably 1-8, and most preferably 2; each x represents an average degree of polymerization and independently in the range from 1 to 50, preferably from 10 to 20; and R⁵ can be a branched, cyclic, straight, saturated or unsaturated fluorinated carbon chain, including perfluoroalkyl groups, perfluoroalkylene groups, and the like. An occasional carbon-bonded hydrogen atom, bromine atom, or chlorine atom may be present in R⁵; where present, however, these atoms preferably are present not more than once for every two carbon atoms. Preferably R⁵ is F₂ₙ₊₁Cₙ- or F₂ₙ₋₁Cₙ-, and the average n is in the range from 1 to 20. R⁶ in formulas III(a-b) is hydrogen, a straight, branched, cyclic, saturated or unsaturated alkyl group, a straight, branched, cyclic, saturated or unsaturated oxy-alkyl group, a (meth)acrylate group, or other similar organic molecules, including any of those defined as R⁵. For example, R⁶ may be selected from organic groups such as alkyl groups, phenyl groups, naphthyl groups, alkylphenyl groups, alkylamino groups, alkenylamino groups, alkylthio groups, perfluoroalkenyl or perfluoroalkyl groups, etc. Preferably R⁶ is hydrogen or an alkyl group containing from 1 to 10 carbon atoms. It is also possible in formulas III(a-b) for some of the hydrogens in the repeating polyoxyalkylene to be replaced by an alkyl group such as -CH₃.

Where R⁵ is the perfluorinated group F₂ₙ₊₁Cₙ-, the nonionic perfluoro surfactant according to formula III.a has the formula

F₂ₙ₊₁Cₙ(C_{y}H_{2y}O)ₓR⁶ (III.a.1)

wherein R⁶ is preferably hydrogen or an alkyl group, n is preferably in the range from 1 to 12, y is preferably 2, and x is preferably in the range from 1 to 50. Most preferably, R⁶ is hydrogen, x average equals 10, y is 2, and n equals 8; formula III.a.1 then becomes

F₁₇C₈(CH₂CH₂O)₁₀H (III.a.2)

which is commercially available from DuPont, under the trade name ZONYL FSN.

Where R⁵ is a perfluoroalkylene group F₂ₙ₋₁Cₙ-, and R⁶ is -CH₃, nonionic perfluoro surfactants according to formula III.b include those having the general formula

F₂ₙ₋₁CₙO(C_{y}H_{2y}O)ₓCH₃ (III.b.1)

where n is preferably from 3-18, most preferably 9; x is from 1 to 50, preferably from about 10-20, and y preferably is 1 or 2. Where R⁵ is a branched perfluorinated alkenyl group R^{b}, this surfactant becomes:

R^{b}O(CH₂CH₂O)ₓCH₃ (III.b.2)

where R^{b} is preferably derived from mono-unsaturated tetrafluoroethylene or hexafluoropropylene oligomers, and is most preferably a branched F₁₇C₉ group derived from hexafluoropropylene trimer, and x average is about 16, preferably 16.3.

Nonionic perfluoro surfactants comprising polyoxyethylene segments generally can be synthesized by the dehydrofluorinating condensation between a perfluoroalkene and a hydroxy compound having a polyoxyethylene chain. The reaction may be carried out in the presence of a suitable base, such as potassium carbonate, in a reaction solvent such as acetone, methyl ethyl ketone, etc., at about room temperature to 100 C. A general description of the synthesis of these compounds may be found in U.S. Pat. No. 4,272,615.

Another class of surfactant preferred in the practice of the present invention includes (meth)acrylate monomers comprising a fluorinated group, generally represented by formula IV: 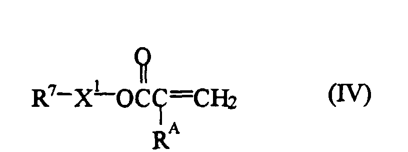 wherein X' is a divalent linking group such as an alkyl group, preferably -CH₂-, or -CH₂CH₂-, or a polyether group, preferably -(OCH₂CH₂)ₓ- wherein x (average) is preferably in the range from 1 to 20; R^{A} is preferably hydrogen or CH₃; and R⁷ is a fluorinated group, preferably, a fluorochemical sulfonamide.

Monomers of formula IV in which R⁷ is a fluorochemical sulfonamide may be represented as: 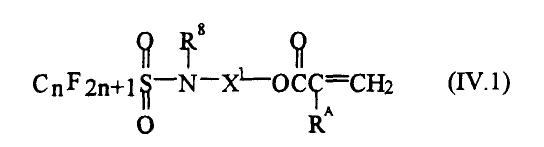 wherein n is preferably from about 4 to 12, most preferably 8; R⁸ is preferably hydrogen or a lower alkyl of from 1-12 carbon atoms such as -CH₃, -CH₂CH₃ and the like, most preferably -CH₂CH₃ or -CH₂CH₂CH₂CH₃; X¹ is a divalent linking group such as an alkyl group, preferably -CH₂-, or -CH₂CH₂-, or a polyether group, preferably -(OCH₂CH₂)ₓ- wherein x (average) is preferably in the range from 1 to 20; and R^{A} is preferably hydrogen or a methyl group. Specific monomers according to formula IV.1 include, for example:

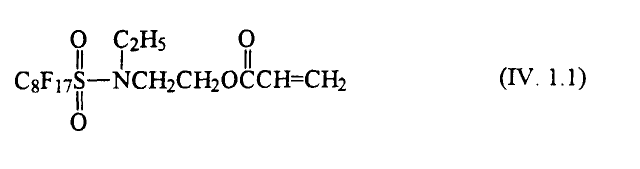

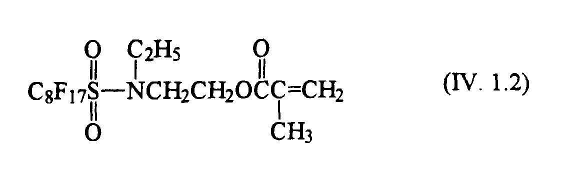

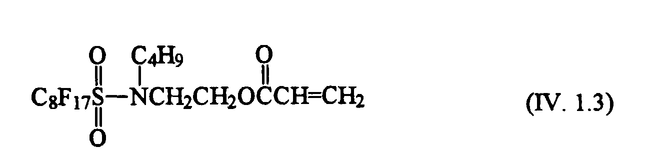

A further class of preferred nonionic surfactant includes polymers and copolymers comprising pendant perfluorinated groups. A particularly preferred copolymer comprising pendant perfluorinated groups is obtained by copolymerizing about 60-95, preferably 70, parts by weight of a nonfluorinated vinyl monomer having the general formula 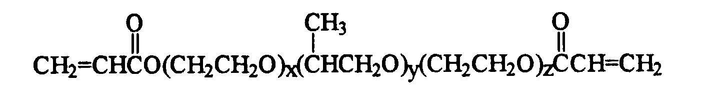 wherein x, y, and z, are preferably chosen to provide an average molecular weight in the range from about 500 to 10000, preferably about 2200; x, y, and z, are preferably in the range from about 7 to 17, 16 to 26, and 7 to 17, respectively, and the ratio of (x+z):y is in the range from about 4:6 to 6:4; with about 5-40, preferably 30, parts by weight of a vinyl monomer comprising a fluorinated group having the formula

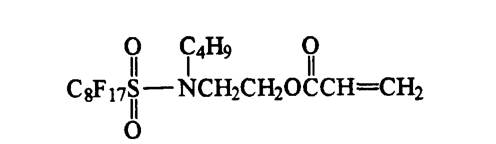

Another particularly preferred copolymer comprising pendant perfluorinated groups can be obtained by copolymerizing about 60-95, preferably 70, parts by weight of a nonfluorinated vinyl monomer having the formula 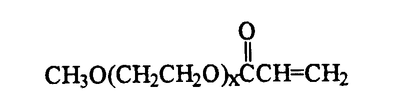 wherein x (average) is preferably in the range from about 10 to 25, preferably from about 12 to 18, and is chosen to provide an average molecular weight in the range from about 500 to 1100, preferably about 600 to 900, with about 540, preferably 30 parts by weight of a fluorinated vinyl monomer having the formula

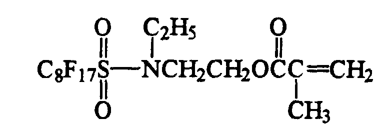

Copolymers comprising pendant fluorinated groups may be prepared by free-radical polymerization methods known in the art. These methods include but are not limited to bulk, solution, emulsion and suspension polymerization methods such as those which have been described in U.S. Pat. No. 3,341,497.

A final class of preferred nonionic surfactant are the nonionic fluorinated surfactants described in U.S. Pat. No. 5,176,943 (Woo) columns 5-6. Of these, the most preferred nonionic fluorinated surfactants are those having the general formula 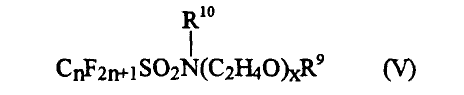 wherein n is from about 4 to 12; R⁹ is H or a lower alkyl of from 1 to 12 carbon atoms, preferably H or CH₃, R¹⁰ is hydrogen or a lower alkyl of 1-12 carbon atoms, such as H, -CH₃, -CH₂CH₃, etc., and x (average) is from about 1 to 20. Most preferred embodiments of formula V are shown in formulas V.1 and V.2: 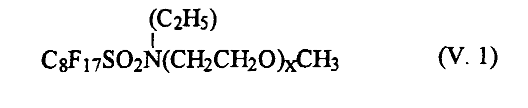 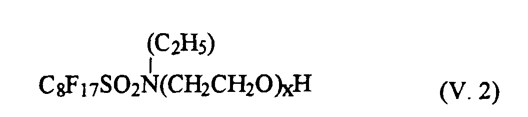 wherein x represents an average degree of polymerization, and is preferably in the range from about 5 to 8, and is most preferably from about 7.2 to 8.

The uncured hard coat composition of the present invention may also optionally comprise a silicone-containing compound. Preferably, the silicone-containing compound may be radiation-curable; i.e., it may comprise one or more vinyl unsaturated moieties that will copolymerize with the radiation-curable component upon being exposed to suitable radiation. By copolymerizing with the radiation-curable component, the radiation-curable silicone-containing compound will become an integral part of the cured hard coat, thus eliminating silicone transfer and silicone contamination problems over time. Preferably, the vinyl unsaturated group in the radiation-curable silicone-containing compound is a (meth)acrylate group and the radiation-curable silicone-containing compound is a silicone-containing (meth)acrylate compound.

As another advantage, radiation-curable silicone-containing compounds may also be selected to control their compatibility with the other components of the hard coat composition. For instance, radiation-curable silicone-containing compounds useful in the practice of the present invention preferably comprise a polyoxyalkylene segment (e.g., polyoxymethylene, polyoxyethylene, polyoxypropylene, etc.) that is incorporated into the backbone of the radiation-curable silicone-containing compound. The polyoxyalkylene segment provides an organic segment which enhances the compatibility of the radiation-curable silicone-containing compound with the acrylic-based radiation-curable component, and allows the radiation-curable silicone-containing compound to be soluble in the radiation-curable component. In the absence of the polyoxyalkylene segment, the radiation-curable silicone-containing compound and the acrylate-based radiation-curable component may tend to form two phases when combined, leading to haze, orange peel, craters, ghosting, or other surface imperfections upon coating. Preferably, the polyoxyalkylene segment is a polyoxypropylene segment.

One class of preferred radiation-curable silicone-containing compounds are the silicone-containing (meth)acrylate compounds having the general formula 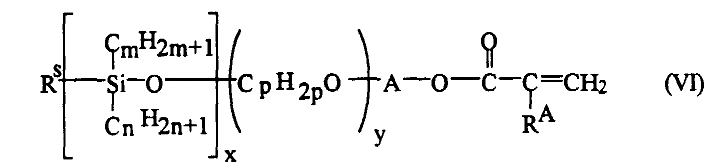 wherein R^{A} is preferably H or CH₃, R^{s} is an alkyl group or hydrogen, A is a hydroxy-containing divalent linking group, x is in the range from 1-9, preferably from 4-7; m, n, and p, are all independently in the range from 1 to 10, preferably m is 1, n is 1, and p is 3.

Where A is CᵣH₂ᵣ₋₁, further comprising a hydroxy group pendant from any of the carbon atoms, formula VI becomes 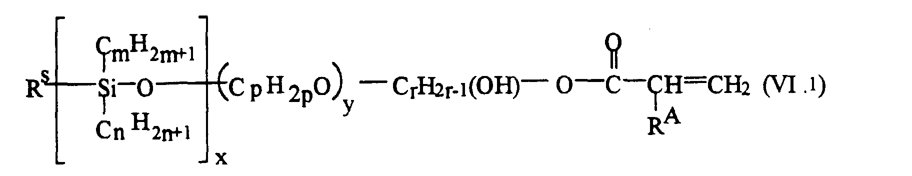 wherein R^{A}, R^{S}, x, y, m, n, and p are defined as above, and r is in the range from 1 to 10, preferably r is 3, and the silicone-containing (meth)acrylate compound is a polydimethylsiloxane. The silicone-containing (meth)acrylate compound is most preferably a polydimethylsiloxane (meth)acrylate having the formula: 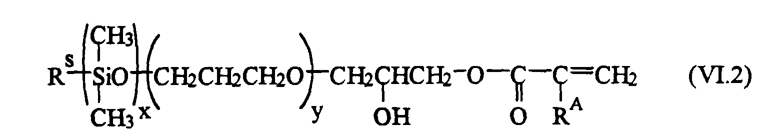 wherein R^{S} and R^{A} are as defined above, x is in the range from 1-9, preferably from 4-7, and y is in the range from 1-30, preferably from 1-20. Most preferably x=4, y=1, and R^{S} is -CH₃ as in the following formula: 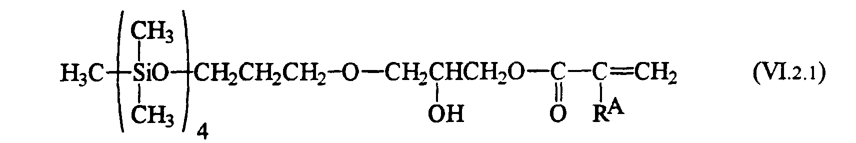 wherein R^{A} is H or CH₃. This polydimethylsiloxane (meth)acrylate is commercially available from Goldsmith AG, of Essen, Germany under the trade name RC711.

The antistatic hard coat layer of the present invention is a cured composition obtained from an admixture of ingredients comprising various amounts of the fluorinated ionic salt, the nonionic perfluoro surfactant, the radiation-curable component, and the radiation-curable silicone-containing compound. Specifically, we have found that using from about 1 to 4 parts by weight (pbw), preferably from about 1 to 3 pbw, of the fluorinated ionic salt; from about 0.5 to 4 pbw, preferably from about 0.5 to 2 pbw, of the nonionic perfluoro surfactant; from about 95 to 99 pbw, preferably from about 96 to 97 pbw, of the radiation-curable component; and from about 0.5 to 5 pbw, preferably from about 1 to 3 pbw, of the radiation-curable silicone-containing compound, based on 100 pbw of hard coat ingredients, is suitable.

Optionally, the antistatic hard coat compositions of the present invention further comprise a photo initiator which facilitates the curing reaction. Examples of useful photoinitiators include, but are not limited to: Darocure 4265, Irgacure 184, Darocure 1173, and Irgacure 907. These photoinitiators are commercially available from Ceiby Geigy of Hawthorne, New York. The photoinitiator can preferably be present in amounts in the range for 0.25-15 parts by weight, based on 100 parts by weight of radiation-curable material.

Preferably, the antistatic hard coat layers of the present invention are prepared from uncured admixtures of appropriate ingredients which are then applied to optical recording media substrates, such as the magneto optic recording disk 10 of FIG. 1, using a spin coating technique, and then cured by UV (ultraviolet) radiation to form an antistatic hard coat layer.

Admixtures of the uncured hard coat composition of the present invention generally have a viscosity that is sufficiently low to allow spin coating even without any solvent being added to the composition. Spin coating can be accomplished by methods known in the art, and for example, with a Convac coater from Convac of Vailhengen, Germany. Although a solvent is not required for spin coating, a solvent may be advantageous to facilitate the compounding process, i.e., for dissolving raw materials, for extending the shelf life of the finished composition, or for adjusting viscosity of the admixture.

Spin coating allows an extremely uniform coated layer having a thickness of only 0.5 to 20 µm, preferably 0.8 to 10 µm, more preferably 1 to 5 µm, most preferably from 1 to 2 µm, to be easily and quickly formed. To avoid error caused by refraction, it can be desirable that the optical index of the hard coat layer **22** be approximately similar to the optical index of the transparent substrate **14**. However, an advantage of providing thin antistatic coatings is that it becomes less important to match these optical indexes, because light passing through a thin coating will experience less refraction.

According to the spin coating technique, an admixture of uncured components of the hard coat layer is prepared. The admixture is delivered onto the substrate **14** of the magneto optic disk **10** using a conventional spin coating apparatus. Such an apparatus generally includes a dispensing needle, a syringe, and a pump. Dispensing the hard coat admixture onto the disk may involve either manually or automatically dispensing the fluid by means of a syringe and a pump. Preferably, the disk to be coated is pre-cleaned with ionized air prior to spin-coating. For admixtures having a viscosity in the range from 5 to 100 centipoise, a needle pressure of 5 to 20 psi (25 to 103 cm Hg) delivers a suitable amount of the admixture onto the center of a disk in about 2 seconds when the disk is spinning at 30 to 50 rpm. Preferably, an in-line filter (0.1 to 2 µm) is used to remove particles from the admixture before the admixture is allowed to pass through the dispensing needle. After delivery, a high spinoff speed of 1800 to 3500 rpm for 3 to 5 seconds disperses the solution into a thin, uniform coating.

The wet coating is then cured with a suitable form of radiation. Preferably, curing occurs in a chamber fitted with an exhaust fan. Typically, the exhaust fan is operated during curing in order to remove low boiling, volatile components from the oven.

The uncured antistatic hard coat composition of the present invention may be cured using any suitable form of radiation such as electron beam radiation or ultraviolet radiation. It is preferred that the composition be photocurable, i.e., curable with ultraviolet radiation. Various sources of UV radiation are suitable, including electric powered arc lamps, such as medium pressure or high pressure mercury lamps; and electrodeless lamps; such as H-type, D-type, or V-type metal halide lamps. The specific radiation source should be selected to correspond with the absorption spectra of any photoinitiator. As an example, a UV radiation source operating at wavelengths of between 240 to 450 nm and an energy of 200 to 450 mj/cm² for 4 to 6 seconds would be preferable in the practice of the present invention.

Preferably, spin coating and/or curing occurs in an inert atmosphere. For example, an atmosphere comprising 90% or more nitrogen may be used.

The objects and advantages of the present invention are further illustrated by the following examples, but the particular materials and amounts thereof recited in these examples, as well as the conditions and details, should not be construed to unduly limit this invention.

### EXAMPLE 1

This example describes antistatic hard coat sample formulations 1-7, which comprise: UV curable components; the nonionic perfluoro surfactant having the formula:

F₁₇C₉O(CH₂CH₂O)_{16.3}CH₃

(designated surfactant A); and fluorinated ionic salts, specifically, lithium tris-(trifluoromethylsulfonyl) methide (designated Salt A), lithium bis-(trifluoromethylsulfonyl)imide (HQ-115) and lithium trifluoromethanesulfonate (FC-122). Table 1 identifies the quantities of the different ingredients for each sample in parts by weight. The mixing of all ingredients in all examples was done at room temperature with a shaker table from Eberbach Corp. of Ann Arbor Michigan.

To produce samples 1 through 7, each fluorinated ionic salt was first dissolved in either a solvent or a (meth)acrylate functional (reactive) diluent. For samples I and 2 the reactive diluent SR 285 was charged into a first mixing container. The fluorinated ionic salt was added directly to the reactive diluent and the admixture was shaken for 30 minutes until a homogeneous solution was obtained.

For samples 3-7 the fluorinated ionic salt was first dissolved in isopropanol (IPA) by shaking until a homogenous solution was obtained (20-30 minutes). SR 285 reactive diluent was then added to this solution, which was then shaken for another 30 minutes.

Control 1 was made identically to samples 3-7 except that it did not contain a fluorinated ionic salt.

For all samples, the nonionic perfluorinated surfactant, Surfactant A, was added to the above fluorinated ionic salt solution. The mixture was shaken until the nonionic perfluorinated surfactant had completely dissolved (20-30 minutes).

In a second container, the multifunctional monomers and multifunctional oligomers were mixed. The most viscous component was added first followed by the less viscous components, shaking the mixture between each addition. Reactive diluent HDODA was then added to all samples. The mixture was shaken until the components no longer were visibly separate, followed by 30 minutes of additional shaking.

The admixtures containing the SR(Sartomer) 285, the fluorinated ionic salt, and the nonionic perfluoro surfactant, (and for samples 3-7 and Control 1, IPA), were placed into a syringe and filtered through a 0.20 micron "Acrodisc" filter. The filtrate was added to the admixture containing the multifunctional monomers and oligomers and HDODA and mixed for 15 minutes.

For samples 1 and 2, the Irgacure 184 photoinitiator was added directly to the above admixture and the resulting admixture was shaken for 30 minutes.

For samples 3-7 and Control 1, in a separate container the Irgacure 184 photoinitiator was completely dissolved in IPA by shaking for 15-20 minutes. This solution was placed into a syringe and filtered through a 0.20 micron Acrodisc filter. The filtrate was added to the mixture of fluorinated ionic salt, reactive diluents, IPA, nonionic surfactant, multifunctional monomers, and multifunctional oligomers, and the resulting solution was shaken on the shaker table for another 30 minutes.

The viscosities of uncured hard coat samples 1, 4-7 and Control 1 were measured (in centipoise, cps) with a Brookfield cone and plate viscometer at 10 rpm (revolutions per minute) and 26-27C, with a cone number 42, Model RVDV-II+, from Brookfield Engineering Laboratories, Inc., of Stoughton, MA.

The viscosities of uncured hard coat samples 2 and 3 were measured with a Brookfield viscometer with a UL adapter Model DV-II. A Brookfield Model EX-200 Constant Temperature Bath was used to maintain the water temperature at 25C +/- 2C.

Prior to spin coating, the samples were left for 30 minutes to allow any entrapped air to dissipate from the solution. To spin coat, each admixture of uncured hard coat ingredients was manually dispensed onto a polycarbonate disk surface using a disposable syringe outfitted with a 0.2 micron Teflon Acrodisc filter and a needle. The hard coat compositions were spin coated onto the polycarbonate disk substrates. Each disk was rotated for 2-3 seconds at a speed of 30-50 revolutions per minute (rpm) while the hard coat admixture was applied to the disk, followed by a faster spinning cycle of 2200 to 3500 rpm for 6-7 seconds.

The applied coatings were subsequently cured to a "tack free" finish by an ultraviolet radiation source in a nitrogen atmosphere. The surfaces of the hard coat layers were examined for cosmetic defects such as streaks, haze, orange peel and oily residue by visual and microscopic inspections. All samples were found to be cosmetically acceptable.

To evaluate the antistatic performance of the cured hard coat layers their surface resistivities were measured at 29-31% relative humidity at 25C using an Electrode Model 803B and recorded with a Galvanometer Model 872 from Electro Tech Systems, Inc., of Glenside Penn. Residual charge, and 10% decay of 5000 volts, of the cured hard coat layers on clear polycarbonate substrates were measured at 25C and 44-47% humidity using a Model 406D Static Decay Meter from Electro Tech Systems, Inc. The adhesion of the cured hard coat layers to the polycarbonate surfaces was measured according to ASTM D3359-83 (cross hatch adhesion) using a cross-cut tester from BYK-Gardner, Inc., of Silver Springs MD. Pencil hardness was measured according to ASTM D3363-74. Test results are given in Table 1.

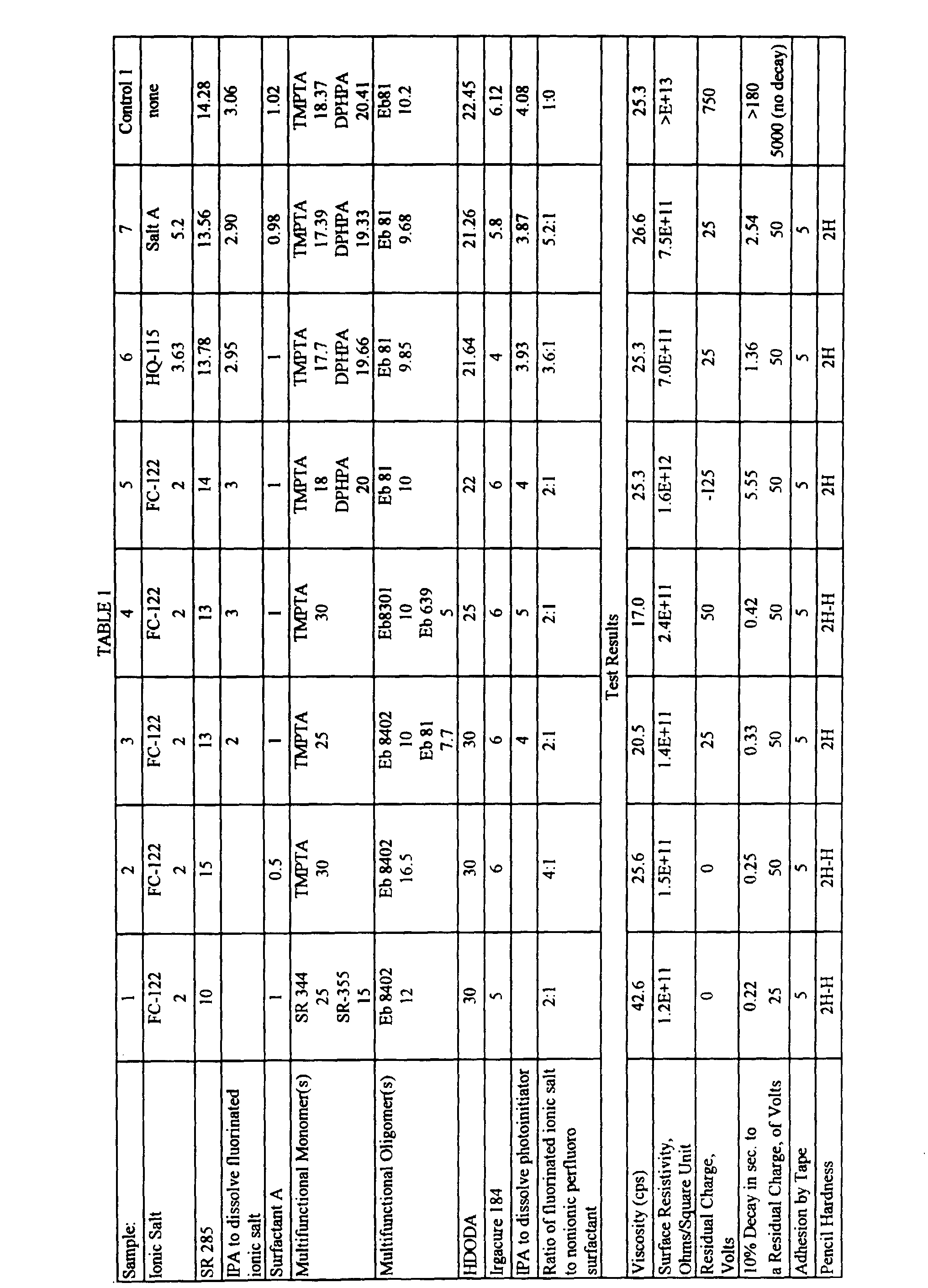

Table 1 shows the improved antistatic performance of hard coat layers comprising the three different fluorinated ionic salts on the electrical resistivity of the cured hard coats, as compared to Control 1.

Table 2 compares the surface resistivity of samples having the same molar concentration (millimoles per milliliter (mmol/ml)) of the different fluorinated ionic salts. At equal concentrations, HQ-115 and Salt A more effective than FC-122, and HQ-115 is slightly more effective than Salt A.

**TABLE 2**

| sample | 5 | 6 | 7 |
|---|---|---|---|
| ionic salt | HQ-115 | SALT A | FC-122 |
| Concentration of Fluorinated ionic salt (mmol/ml) | 0.128M | 0.128M | 0.128M |
| Surface Resistivity (Ohms/sq. unit) at 30-31% R.H. 25C | 7 x 10¹¹ | 7.5 x 10¹¹ | 1.6 x 10¹² |
| A higher surface resistivity value indicates a less conductive surface. | | | |

### EXAMPLE 2

This example describes hard coat samples 8-11, which comprise UV curable components, the fluorinated ionic salts described in Example 1, nonionic perfluorinated surfactants, and a silicone-containing (meth)acrylate compound, specifically, polydimethylsiloxane acrylate. Table 3 describes the amounts of each ingredient for each sample, in parts by weight.

The following procedure was used to produce samples 8-11. The (meth)acrylate functional diluent, HDODA, was placed in a mixing container. The nonionic perfluorinated surfactants defined in Example 1 as Surfactant A, and the nonionic perfluoro surfactant: 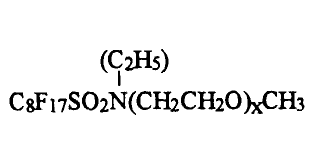 wherein x (average) is about 7.2 (designated surfactant B), were added to the HDODA according to Table 3. Next, the fluorinated ionic salts (FC-122, HQ-115, and lithium tris-(trifluoromethylsulfonyl) lithium salt (designated Salt A)) were added according to Table 3. The mixture was shaken by shaker table until the fluorinated ionic salt and nonionic perfluoro surfactant were completely dissolved.

The nonionic perfluorinated surfactant and fluorinated ionic salt must be added to the HDODA prior to the other ingredients, e.g., the multifunctional monomers or oligomers and the silicone-containing (meth)acrylate. If the fluorinated ionic salt and the nonionic surfactant are added after the other ingredients, the fluorinated ionic salt and nonionic surfactant do not completely dissolve. This leads to a cloudy or two-phase admixture which when coated, results in haze and orange peel and consequently a nonfunctional media.

The remaining ingredients were added to the above admixtures in the following order: multi-functional acrylate monomer trimethylol propane triacrylate (TMPTA); multi-functional oligomers Eb 80, Eb 81, and Eb 605; polydimethylsiloxane acrylate RC 711; and photo initiators Irgacure 184 and Darocure 1173. Small amounts of solvent (methanol or a 50/50 methanol/ethyl acetate mixture) were added to samples 8, 9, and 11 as a means of keeping the ionic-nonionic complexes in solution for a long period of time. The mixture was agitated by shaker table until it formed a homogeneous solution. Viscosities of the hard coat compositions were measured as with samples 2 and 3 of Example 1.

The solutions were coated onto a polycarbonate disk substrate using a Convac laboratory coater. The coatings were dispensed via a luer-lock syringe fitted with a 0.8 micron disposable filter. Each disk was rotated on a Convac laboratory coater for 2-3 seconds at a speed of 30-50 revolutions per minute (rpm) while the hard coat admixture was applied to the disk, followed by a faster spinning cycle of 2200 to 3500 rpm for 6-7 seconds.

The applied coatings were subsequently cured to a "tack free" finish by an ultraviolet radiation source in an air atmosphere.

Surface properties were measured as in Example 1. Additionally, hard coat layer shrinkage was measured by dividing the difference between the density of the cured film and the density of the uncured solution by the density of the uncured solution. Low shrinkage is desirable because it assures that the mechanical properties of the coated media, such as tilt, are not be affected by the hard coat layer.

**TABLE 3**

| | Sample 8 | Sample 9 | Sample 10 | Sample 11 | Control 2 |
|---|---|---|---|---|---|
| HDODA | 28 | 27 | 25 | 24.5 | 26 |
| TMPTA | 21 | 22 | 30 | 45.5 | 46 |
| Eb 605 | 18 | 19 | 20 | 9 | 17 |
| Eb 80 | 7 | | | | |
| Eb 81 | | 7 | | | |
| Surfactant A | | | 7 | | |
| Surfactant B | | | | 0.9 | 1 |
| Zonyl FSN | 1 | 1 | | | |
| RC 711 | 2 | 2 | 1 | 1 | |
| Salt A | | | 7.0 | | |
| HQ-115 | | | | 0.9 | |
| FC-122 | 3.0 | 2.0 | | | |
| Irgacure 184 | 5 | 5 | 5 | 4.5 | 5 |
| Darocure 1173 | 5 | 5 | 5 | 4.5 | 5 |
| Methanol | 10 | 10 | 0 | | |
| Ethyl Acetate/Methanol | | | | 4.6/4.6 | |
| Viscosity (cps) | 21 | 18 | 50 | 15 | 42 |

| Test Results | | | | | |
|---|---|---|---|---|---|
| Surface Resistivity (conditions) | 1.5E+12 (77F/56%R.H.) | 1.8E+12 (77F/56% R.H.) | >1E+13 (77F/30% R.H.) | 5.3E+12 (77F/49% R.H.) | >1E+13 (77F/56%R.H.) |
| %Shrinkage | 10 | 10 | 9 | 11 | 10 |
| Pencil Hardness | 2H | 2H | 2H-3H | 2H | 2H |

The environmental stability characteristics of the hard coat formulations comprising FC-122/Zonyl FSN and the HQ-115/FC 171 combinations were evaluated using three different accelerated conditions, 80C/85% humidity, 90C/95% humidity, and 100C/100% humidity. The environmental stability of the coatings was evaluated based on the performance of the coatings after each accelerated aging condition. A cured hard coat layer is considered to be environmentally stable if it remains visually perfect after exposure to the accelerated aging conditions; i.e., it does not become hazy, cloudy, delaminated, or show signs of bubbles, or cracking. Table 4 summarized the results.

**TABLE 4**

| | 80C/85% R.H. for 500 hrs | 90C/95% R.H. for 144 hrs | 100C/100% R.H. for 120 hrs |
|---|---|---|---|
| Samples 8, 9 FC 122/Zonyl FSN | Surfaces are cloudy, delaminated, and cracking | Surfaces are cloudy, delaminated, and cracking | Surfaces are cloudy, delaminated, cracking and micro-bubbles |
| Sample 11 HQ-115/ Surfactant B | visually perfect | visually perfect | visually perfect |

Table 4 shows that sample 11, which contains HQ-115 and Surfactant B, is stable in conditions of high temperature and high humidity.

## Claims

1. An optical recording disk having an antistatic hard coat layer provided on at least one surface of the disk, wherein the antistatic hard coat layer comprises a fluorinated ionic salt of the general formula: 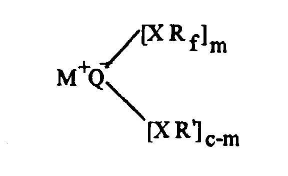 wherein M⁺ represents a cation, Q represents either a carbon atom or a nitrogen atom, each X independently represents a divalent linking group, R_{f} represents a fluorinated group; and R' represents a monovalent organic group; and
when Q is carbon, c is 3 and m is 1, 2, or 3; and
when Q is nitrogen, c is 2 and m is 1 or 2.

2. The optical recording disk of claim 1, wherein Q is carbon.

3. The optical recording disk of claim 1, wherein Q is nitrogen.

4. The optical recording disk of claim 1, wherein R' is an alkyl or aryl group, or a halogen-substituted alkyl or aryl group.

5. The optical recording disk of claim 1, wherein M⁺ is Li⁺.

6. The optical recording disk of claim 1, wherein R_{f} is CₙF₂ₙ₊₁, where n is in the range from about 1 to 12.

7. The optical recording disk of claim 1, wherein the fluorinated ionic salt is a bis-(perfluoroalkylsulfonyl) imide salt.

8. The optical recording disk of claim 7, wherein the fluorinated ionic salt is a lithium bis-(perfluoroalkylsulfonyl) imide.

9. The optical recording disk of claim 8, wherein the fluorinated ionic salt is lithium bis-(trifluoromethylsulfonyl)imide:

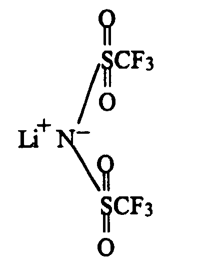

10. The optical recording disk of claim 1, wherein the fluorinated ionic salt is a tris-(perfluoroalkylsulfonyl) methide salt.

11. The optical recording disk of claim 10, wherein the fluorinated ionic salt is a lithium tris-(perfluoroalkylsulfonyl) methide.

12. The optical recording disk of claim 11, wherein the ionic salt is lithium «is(trifluoromethylsulfonyl) methide:

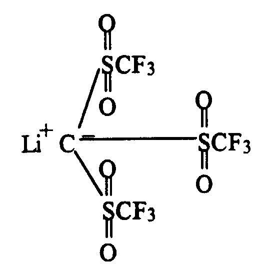

13. The optical recording disk of claim 1, wherein the hard coat layer further comprises a nonionic fluorinated surfactant.

14. The optical recording disk of claim 13, wherein the nonionic fluorinated surfactant comprises a polyoxyethylene segment.

15. The optical recording disk of claim 14, wherein the nonionic fluorinated surfactant comprises a perfluorinated group.

16. The optical recording disk of claim 14, wherein the nonionic perfluoro surfactant has the formula:
F₂ₙ₊₁Cₙ(CH₂CH₂O)ₓR⁶
wherein R⁶ is hydrogen or an alkyl group, n is in the range from 1 to 12, and x is in the range from 1 to 50.

17. The optical recording disk of claim 15, wherein the nonionic perfluoro surfactant is
F₁₇C₈(CH₂CH₂O)₁₀H

18. The optical recording disk of claim 15, wherein the nonionic perfluoro surfactant has the formula:
F₂ₙ₋₁CₙO(CH₂CH₂O)ₓCH₃
where x is in the range from 10-20, and n is in the range from 3 to 18.

19. The optical recording disk of claim 18, wherein the nonionic perfluoro surfactant is
F₁₇C₉O(CH₂CH₂O)ₓCH₃

20. An optical recording disk having an antistatic hard coat layer provided on at least one surface of the disk, wherein the antistatic hard coat layer is a cured composition obtained from ingredients comprising
a) a fluorinated ionic salt;
b) a radiation-curable component;
c) a nonionic perfluoro surfactant; and
d) a radiation-curable silicone-containing compound.

21. The optical recording disk according to claim 20, wherein the cured hard coat composition is obtained from
a) 1-4 parts by weight of a fluorinated ionic salt;
b) 95-99 parts by weight of a radiation-curable component;
c) 0.5-4 parts by weight of a nonionic perfluoro surfactant; and
d) 0.5-5 parts by weight of a radiation-curable silicone-containing compound.

22. The optical recording disk of claim 20, wherein the fluorinated ionic salt has the general formula: 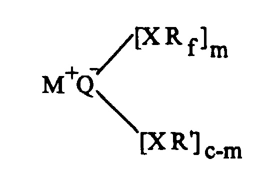 wherein M⁺ represents a cation, Q⁻ represents a carbon atom, a nitrogen atom, or an oxygen atom; each X independently represents a divalent linking group, R_{f} represents a fluorinated group; and R' represents a monovalent organic group; and
when Q⁻ is carbon, c is 3 and m is 1 or 2 or 3;
when Q⁻ is nitrogen, c is 2 and m is from 1 or 2; and
when Q⁻ is oxygen, c is 1 and m is 1.

23. The optical recording disk of claim 22, wherein Q is carbon.

24. The optical recording disk of claim 22, wherein Q is nitrogen.

25. The optical recording disk of claim 22, wherein Q is oxygen.

26. The optical recording disk of claim 22, wherein R' is an alkyl or aryl group, or a halogen-substituted alkyl or aryl group.

27. The optical recording disk of claim 22, wherein R_{f} is CₙF₂ₙ₊₁, and wherein
when Q⁻ is carbon or nitrogen, n is in the range from 1 to 12, and
when Q⁻ is oxygen, n is in the range from 1 to 3.

28. The optical recording disk of claim 22, wherein M⁺ is Li⁺.

29. The optical recording disk of claim 22, wherein the fluorinated ionic salt is a bis-(perfluoroalkylsulfonyl) imide salt.

30. The optical recording disk of claim 29, wherein the fluorinated ionic salt is a lithium bis-(perfluoroalkylsulfonyl) imide.

31. The optical recording disk of claim 30, wherein the ionic salt is lithium bis-(trifluoromethylsulfonyl)imide:

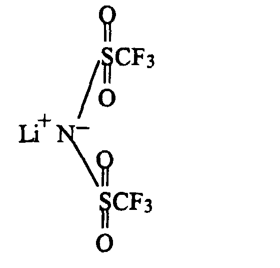

32. The optical recording disk of claim 22, wherein the fluorinated ionic salt is a tris-(perfluoroalkylsulfonyl) methide salt.

33. The optical recording disk of claim 32, wherein the fluorinated ionic salt is a lithium tris-(perfluoroalkylsulfonyl) methide.

34. The optical recording disk of claim 33, wherein the ionic salt is lithium tris-(trifluoromethylsulfonyl) methide:

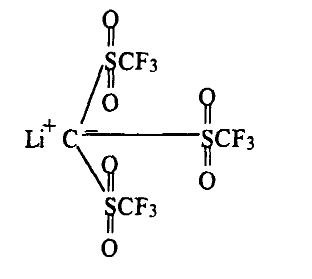

35. The optical recording disk of claim 22, wherein the fluorinated ionic salt is a perfluoroalkylsulfonate.

36. The optical recording disk of claim 35, wherein the fluorinated ionic salt is a lithium perfluoroalkylsulfonate.

37. The optical recording disk of claim 36, wherein the ionic salt is lithium trifluoromethanesulfonate:

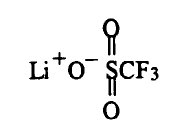

38. The optical recording disk of claim 20, wherein the nonionic perfluoro surfactant comprises a polyoxyethylene segment.

39. The optical recording disk of claim 38, wherein the nonionic perfluoro surfactant is
F₂ₙ₊₁Cₙ(CH₂CH₂O)ₓR⁶
wherein R⁶ is hydrogen or an alkyl group, n is in the range from 1 to 12, and x is in the range from 1 to 50.

40. The optical recording disk of claim 39, wherein the nonionic perfluoro surfactant is
F₁₇C₈(CH₂CH₂O)₁₀H

41. The optical recording disk of claim 38, wherein the nonionic perfluoro surfactant has the formula:
F₂ₙ₋₁CₙO(CH₂CH₂O)ₓCH₃
where x is in the range from 10-20, and n is in the range from 3 to 18.

42. The optical recording disk of claim 41, wherein the nonionic perfluoro surfactant has the formula:
C₉F₁₇O(CH₂CH₂O)ₓCH₃

43. The optical recording disk of claim 20, wherein the nonionic perfluoro surfactant has the formula 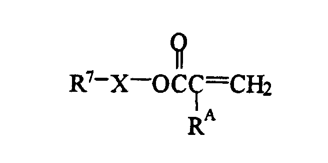 wherein R^{A} is hydrogen or a methyl group, R⁷ is a fluorinated group, and X is a divalent linking group.

44. The optical recording disk of claim 43, wherein the nonionic perfluoro surfactant has the formula: 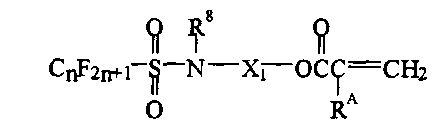 wherein X₁ is a divalent linking group; R⁸ hydrogen or a lower alkyl having from 1-12 carbons; and n is in the range from 4 to 16.

45. The optical recording disk of claim 44, wherein R⁸ is an ethyl or butyl group.

46. The optical recording disk of claim 20, wherein the nonionic perfluoro surfactant has the formula 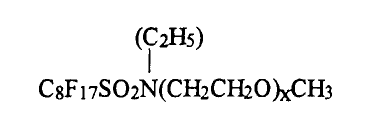 wherein x is in the range from 1 to 20.

47. The optical recording disk of claim 20, wherein the radiation-curable component comprises
a) a (meth)acrylate-functional diluent;
b) a multi-functional (meth)acrylate monomer comprising three or more (meth)acrylate groups; and
c) a multi-functional (meth)acrylate oligomer.

48. The optical recording disk of claim 47, wherein:
the (meth)acrylate-functional diluent is a mono- or di-functional non-aromatic (meth)acrylate monomer; and
the multi-functional (meth)acrylate oligomer has an average molecular weight in the range from 400 to 2000.

49. The optical recording disk of claim 48, wherein the radiation-curable component comprises :
a) 20-60 parts by weight (meth)acrylate-functional diluent;
b) 25-55 parts by weight multi-functional (meth)acrylate monomer comprising three or more (meth)acrylate groups; and
c) 10-30 parts by weight multi-functional (meth)acrylate oligomer; based on 100 parts radiation-curable component.

50. The optical recording disk of claim 47, wherein the (meth)acrylate-functional diluent is chosen from the group consisting of: 1,6-hexanediol di(meth)acrylate, tripropylene glycol di(meth)acrylate, bisphenol A epoxy di(meth)acrylate, isobornyl (meth)acrylate, 2(2-ethoxyethoxy) ethyl (meth)acrylate, tetrahydrofurfuryl (meth)acrylate, polyethylene glycol di(meth)acrylate, n-vinyl formamide, tripropylene glycol di(meth)acrylate, neopentyl glycol dialkoxy di(meth)acrylate, polyethyleneglycol di(meth)acrylate, and mixtures thereof.

51. The optical recording disk of claim 50, wherein the (meth)acrylate-functional diluent is 1,6-hexanediol di(meth)acrylate.

52. The optical recording disk of claim 47, wherein the multi-functional (meth)acrylate monomer comprising three or more (meth)acrylate groups is chosen from the group consisting of trimethylolpropane tri(meth)acrylate, pentaerythritol tri(meth)acrylate, pentaerythritol tetra(meth)acrylate, ditrimethylolpropane tri(meth)acrylate, dipentaerythritol penta(meth)acrylate, dipentaerythritol hydroxy penta(meth)acrylate, trimethylpropane tri(meth)acrylate, and mixtures thereof.

53. The optical recording disk of claim 52, wherein the multi-functional (meth)acrylate monomer comprising three or more (meth)acrylate groups is chosen from the group consisting of trimethylolpropane tri(meth)acrylate, pentaerythritol tetra(meth)acrylate, glyceryl propoxy tri(meth)acrylate, trimethyllopropane tri(meth)acrylate, and mixtures thereof.

54. The optical recording disk of claim 47, wherein the multi-functional (meth)acrylate oligomer is chosen from the group consisting of polyester (meth)acrylates, polyurethane (meth)acrylates, and epoxy (meth)acrylates.

55. The optical recording disk of claim 47, wherein the multi-functional (meth)acrylate oligomer is chosen from the group consisting of: tetrafunctional acrylated polyester oligomer, polyester tetra-functional (meth)acrylate oligomer, multifunctional (meth)acrylated polyester oligomer, bisphenyl A epoxy di(meth)acrylate, trifunctional acrylated polyester oligomer, trifunctional aromatic urethane acrylate oligomer, hexafunctional aliphatic urethane acrylate, difunctional aliphatic urethane acrylate oligomer, and mixtures thereof.

56. The optical recording disk of claim 47, wherein the multi-functional (meth)acrylate oligomer is chosen from the group consisting of: polyester tetra-functional (meth)acrylate oligomer, multifunctional (meth)acrylated polyester oligomer, bisphenol A epoxy di(meth)acrylate, and mixtures thereof.

57. The optical recording disk of claim 20, wherein the radiation-curable silicone-containing compound is a silicone-containing (meth)acrylate compound.

58. The optical recording disk of claim 57, wherein the silicone-containing (meth)acrylate compound comprises a polyoxyalkylene segment.

59. The optical recording disk of claim 58, wherein the silicone-containing (meth)acrylate compound has the general formula 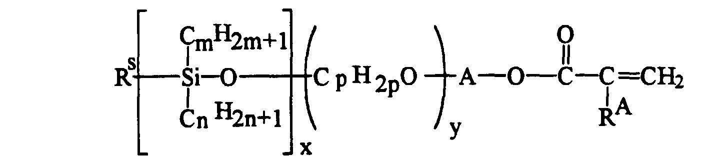 wherein R^{A} is hydrogen or a methyl group, R^{S} is hydrogen or an alkyl group, A is a hydroxy-containing divalent linking group, x is in the range from 1-9, y is in the range from 1-30, m, n, and p, are independently in the range from 1 to 10.

60. The optical recording disk of claim 59, wherein the silicone-containing (meth)acrylate compound has the general formula 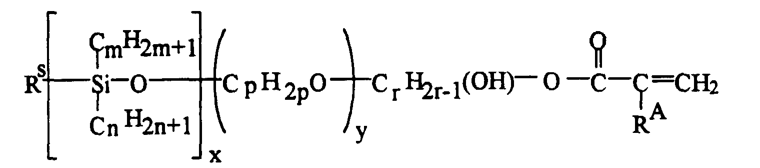 wherein r is in the range of from 1 to 10.

61. The optical recording disk of claim 60, wherein the silicone-containing (meth)acrylate compound has the general formula

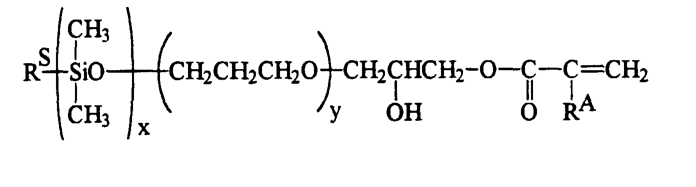

62. The optical recording disk of claim 61, wherein the silicone-containing compound has the general formula:

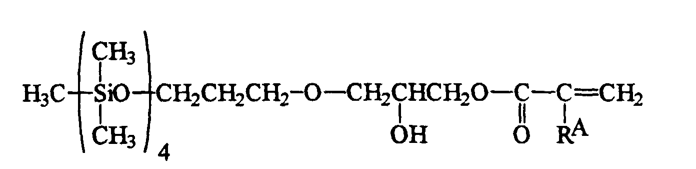

63. The optical recording disk of claim 20, wherein:
the fluorinated ionic salt is lithium bis-(trifluoromethylsulfonyl)imide;
the radiation-curable component comprises:
1,6-hexanediol di(meth)acrylate, trimethylpropanetri(meth)acrylate, bisphenol A epoxydi(meth)acrylate, tripropylene glycol di(meth)acrylate;
the nonionic perfluoro surfactant is: 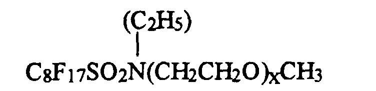 wherein x is in the range from about 5 to 8; and the silicone-containing (meth)acrylate compound is polydimethylsiloxane (meth)acrylate.

64. A cured antistatic coating composition obtained from ingredients comprising
a) a fluorinated ionic salt having the general formula: 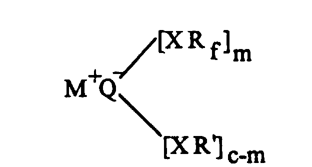
wherein M⁺ represents a cation, Q⁻ represents a carbon atom, a nitrogen atom, or an oxygen atom; each X independently represents a divalent linking group, R_{f} represents a fluorinated group; and R' represents a monovalent nonfluorinated group; and
when Q⁻ is carbon, c is 3 and m is 1 or 2 or 3;
when Q⁻ is nitrogen, c is 2 and m is from 1 or 2; and
when Q⁻ is oxygen, c is 1 and m is 1.;
b) a radiation-curable component;
c) a nonionic perfluoro surfactant; and
d) a radiation-curable silicone-containing compound.

## Patentansprüche

1. Optische Speicherplatte, die auf wenigstens einer ihrer Oberflächen mit einer antistatischen harten Überzugsschicht versehen ist, wobei die antistatische harte Überzugsschicht ein fluoriertes ionisches Salz der allgemeinen Formel 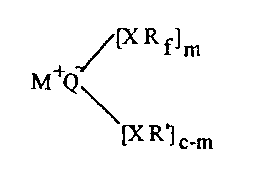
umfaßt, wobei M⁺ ein Kation darstellt, Q entweder ein Kohlenstoffatom oder ein Stickstoffatom darstellt, jedes X unabhängig eine zweiwertige Verknüpfungsgruppe darstellt, R_{f} eine fluorierte Gruppe darstellt und R' eine einwertige organische Gruppe darstellt und,
wenn Q Kohlenstoff ist, c 3 ist und m 1, 2 oder 3 ist und,
wenn Q Stickstoff ist, c 2 ist und m 1 oder 2 ist.

2. Optische Speicherplatte gemäß Anspruch 1, wobei Q Kohlenstoff ist.

3. Optische Speicherplatte gemäß Anspruch 1, wobei Q Stickstoff ist.

4. Optische Speicherplatte gemäß Anspruch 1, wobei R' eine Alkyl- oder Arylgruppe oder eine halogensubstituierte Alkyl- oder Arylgruppe ist.

5. Optische Speicherplatte gemäß Anspruch 1, wobei es sich bei M⁺ um Li⁺ handelt.

6. Optische Speicherplatte gemäß Anspruch 1, wobei es sich bei R_{f} um CₙF₂ₙ₊₁ handelt, wobei n im Bereich von etwa 1 bis 12 liegt.

7. Optische Speicherplatte gemäß Anspruch 1, wobei das fluorierte ionische Salz ein Bis(perfluoralkylsulfonyl)imidsalz ist.

8. Optische Speicherplatte gemäß Anspruch 7, wobei das fluorierte ionische Salz ein Lithiumbis(perfluoralkylsulfonyl)imid ist.

9. Optische Speicherplatte gemäß Anspruch 8, wobei es sich bei dem fluorierten ionischen Salz um Lithiumbis(trifluormethylsulfonyl)imid handelt:

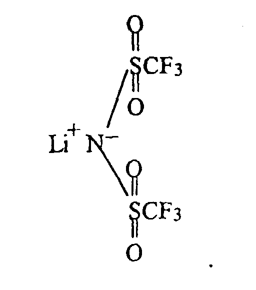

10. Optische Speicherplatte gemäß Anspruch 1, wobei das fluorierte ionische Salz ein Tris(perfluoralkylsulfonyl)methidsalz ist.

11. Optische Speicherplatte gemäß Anspruch 10, wobei das fluorierte ionische Salz ein Lithiumtris(perfluoralkylsulfonyl)methid ist.

12. Optische Speicherplatte gemäß Anspruch 11, wobei es sich bei dem ionischen Salz um Lithiumtris(trifluormethylsulfonyl)methid handelt:

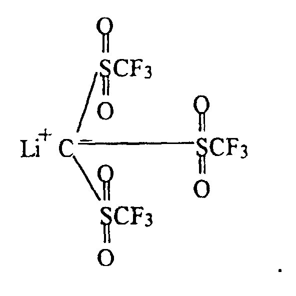

13. Optische Speicherplatte gemäß Anspruch 1, wobei die harte Überzugsschicht weiterhin ein nichtionisches fluoriertes Tensid umfaßt.

14. Optische Speicherplatte gemäß Anspruch 13, wobei das nichtionische fluorierte Tensid ein Polyoxyethylensegment umfaßt.

15. Optische Speicherplatte gemäß Anspruch 14, wobei das nichtionische fluorierte Tensid eine perfluorierte Gruppe umfaßt.

16. Optische Speicherplatte gemäß Anspruch 14, wobei das nichtionische Perfluortensid die Formel
F₂ₙ₊₁Cₙ(CH₂CH₂O)ₓR⁶
hat, wobei R⁶ Wasserstoff oder eine Alkylgruppe ist, n im Bereich von 1 bis 12 liegt und x im Bereich von 1 bis 50 liegt.

17. Optische Speicherplatte gemäß Anspruch 15, wobei es sich bei dem nichtionischen Perfluortensid um
F₁₇C₈(CH₂CH₂O)₁₀H
handelt.

18. Optische Speicherplatte gemäß Anspruch 15, wobei das nichtionische Perfluortensid die Formel
F₂ₙ₋₁CₙO (CH₂CH₂O)ₓCH₃
hat, wobei x im Bereich von 10 bis 20 liegt und n im Bereich von 3 bis 18 liegt.

19. Optische Speicherplatte gemäß Anspruch 18, wobei es sich bei dem nichtionischen Perfluortensid um
F₁₇C₉O(CH₂CH₂O)ₓCH₃
handelt.

20. Optische Speicherplatte, die auf wenigstens einer ihrer Oberflächen mit einer antistatischen harten Überzugsschicht versehen ist, wobei es sich bei der antistatischen harten Überzugsschicht um eine gehärtete Zusammensetzung handelt, die aus Bestandteilen erhalten wird, die
a) ein fluoriertes ionisches Salz,
b) eine strahlungshärtbare Komponente,
c) ein nichtionisches Perfluortensid und
d) eine strahlungshärtbare silikonhaltige Verbindung
umfassen.

21. Optische Speicherplatte gemäß Anspruch 20, wobei die gehärtete Zusammensetzung der harten Überzugsschicht aus
a) 1 bis 4 Gewichtsteilen eines fluorierten ionischen Salzes,
b) 95 bis 99 Gewichtsteilen einer strahlungshärtbaren Komponente,
c) 0,5 bis 4 Gewichtsteilen eines nichtionischen Perfluortensids und
d) 0,5 bis 5 Gewichtsteilen einer strahlungshärtbaren silikonhaltigen Verbindung
erhalten wird.

22. Optische Speicherplatte gemäß Anspruch 20, wobei das fluorierte ionische Salz die allgemeine Formel 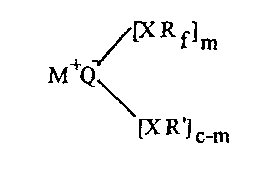
hat, wobei M⁺ ein Kation darstellt, Q⁻ ein Kohlenstoffatom, ein Stickstoffatom oder ein Sauerstoffatom darstellt, jedes X unabhängig eine zweiwertige Verknüpfungsgruppe darstellt, R_{f} eine fluorierte Gruppe darstellt und R' eine einwertige organische Gruppe darstellt und,
wenn Q⁻ Kohlenstoff ist, c 3 ist und m 1 oder 2 oder 3 ist,
wenn Q⁻ Stickstoff ist, c 2 ist und m 1 oder 2 ist und,
wenn Q⁻ Sauerstoff ist, c 1 ist und m 1 ist.

23. Optische Speicherplatte gemäß Anspruch 22, wobei Q Kohlenstoff ist.

24. Optische Speicherplatte gemäß Anspruch 22, wobei Q Stickstoff ist.

25. Optische Speicherplatte gemäß Anspruch 22, wobei Q Sauerstoff ist.

26. Optische Speicherplatte gemäß Anspruch 22, wobei R' eine Alkyl- oder Arylgruppe oder eine halogensubstituierte Alkyl- oder Arylgruppe ist.

27. Optische Speicherplatte gemäß Anspruch 22, wobei es sich bei R_{f} um CₙF₂ₙ₊₁ handelt und wobei, wenn Q⁻ Kohlenstoff oder Stickstoff ist, n im Bereich von etwa 1 bis 12 liegt, und wenn Q⁻ Sauerstoff ist, n im Bereich von 1 bis 3 liegt.

28. Optische Speicherplatte gemäß Anspruch 22, wobei es sich bei M⁺ um Li⁺ handelt.

29. Optische Speicherplatte gemäß Anspruch 22, wobei das fluorierte ionische Salz ein Bis(perfluoralkylsulfonyl)imidsalz ist.

30. Optische Speicherplatte gemäß Anspruch 29, wobei das fluorierte ionische Salz ein Lithiumbis(perfluoralkylsulfonyl)imid ist.

31. Optische Speicherplatte gemäß Anspruch 30, wobei es sich bei dem ionischen Salz um Lithiumbis(trifluormethylsulfonyl)imid handelt:

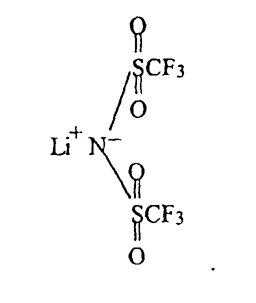

32. Optische Speicherplatte gemäß Anspruch 22, wobei das fluorierte ionische Salz ein Tris(perfluoralkylsulfonyl)methidsalz ist.

33. Optische Speicherplatte gemäß Anspruch 32, wobei das fluorierte ionische Salz ein Lithiumtris(perfluoralkylsulfonyl)methid ist.

34. Optische Speicherplatte gemäß Anspruch 33, wobei es sich bei dem ionischen Salz um Lithiumtris(trifluormethylsulfonyl)methid handelt:

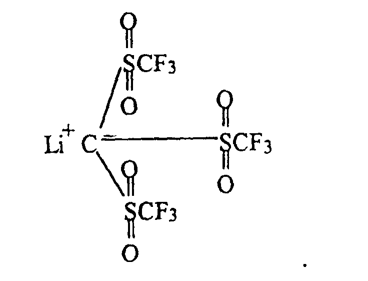

35. Optische Speicherplatte gemäß Anspruch 22, wobei das fluorierte ionische Salz ein Perfluoralkylsulfonat ist.

36. Optische Speicherplatte gemäß Anspruch 35, wobei das fluorierte ionische Salz ein Lithiumperfluoralkylsulfonat ist.

37. Optische Speicherplatte gemäß Anspruch 36, wobei es sich bei dem ionischen Salz um Lithiumtrifluormethansulfonat handelt:

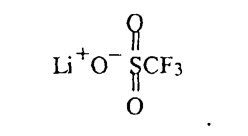

38. Optische Speicherplatte gemäß Anspruch 20, wobei das nichtionische Perfluortensid ein Polyoxyethylensegment umfaßt.

39. Optische Speicherplatte gemäß Anspruch 38, wobei es sich bei dem nichtionischen Perfluortensid um
F₂ₙ₊₁Cₙ(CH₂CH₂O)ₓR⁶
handelt, wobei R⁶ Wasserstoff oder eine Alkylgruppe ist, n im Bereich von 1 bis 12 liegt und x im Bereich von 1 bis 50 liegt.

40. Optische Speicherplatte gemäß Anspruch 39, wobei es sich bei dem nichtionischen Perfluortensid um
F₁₇C₈(CH₂CH₂O)₁₀H
handelt.

41. Optische Speicherplatte gemäß Anspruch 38, wobei das nichtionische Perfluortensid die Formel
F₂ₙ₋₁CₙO (CH₂CH₂O)ₓCH₃
hat, wobei x im Bereich von 10 bis 20 liegt und n im Bereich von 3 bis 18 liegt.

42. Optische Speicherplatte gemäß Anspruch 41, wobei das nichtionische Perfluortensid die Formel
C₉F₁₇O(CH₂CH₂O)ₓCH₃
hat.

43. Optische Speicherplatte gemäß Anspruch 20, wobei das nichtionische Perfluortensid die Formel 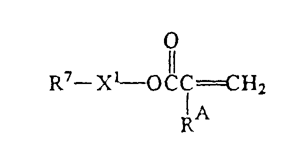 hat, wobei R^{A} Wasserstoff oder eine Methylgruppe ist, R⁷ eine fluorierte Gruppe ist und X¹ eine zweiwertige Verknüpfungsgruppe ist.

44. Optische Speicherplatte gemäß Anspruch 43, wobei das nichtionische Perfluortensid die Formel 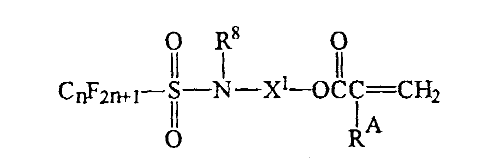 hat, wobei X¹ eine zweiwertige Verknüpfungsgruppe ist, R⁸ Wasserstoff oder ein Niederalkyl mit 1-12 Kohlenstoffatomen ist und n im Bereich von 4 bis 16 liegt.

45. Optische Speicherplatte gemäß Anspruch 44, wobei R⁸ eine Ethyl- oder Butylgruppe ist.

46. Optische Speicherplatte gemäß Anspruch 20, wobei das nichtionische Perfluortensid die Formel 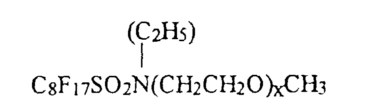 hat, wobei x im Bereich von 1 bis 20 liegt.

47. Optische Speicherplatte gemäß Anspruch 20, wobei die strahlungshärtbare Komponente
a) ein (Meth)acrylat-funktionelles Verdünnungsmittel,
b) ein multifunktionelles (Meth)acrylat-Monomer, das drei oder mehr (Meth)acrylat-Gruppen umfaßt, und
c) ein multifunktionelles (Meth)acrylat-Oligomer
umfaßt.

48. Optische Speicherplatte gemäß Anspruch 47, wobei das (Meth) acrylat-funktionelle Verdünnungsmittel ein mono- oder difunktionelles nichtaromatisches (Meth)acrylat-Monomer ist und das multifunktionelle (Meth)acrylat-Oligomer ein mittleres Molekulargewicht im Bereich von 400 bis 2000 hat.

49. Optische Speicherplatte gemäß Anspruch 48, wobei die strahlungshärtbare Komponente
a) 20-60 Gewichtsteile (Meth)acrylat-funktionelles Verdünnungsmittel,
b) 25-55 Gewichtsteile multifunktionelles (Meth)acrylat-Monomer, das drei oder mehr (Meth)acrylat-Gruppen umfaßt, und
c) 10-30 Gewichtsteile multifunktionelles (Meth)acrylat-Oligomer
umfaßt, bezogen auf 100 Teile strahlungshärtbare Komponente.

50. Optische Speicherplatte gemäß Anspruch 47, wobei das (Meth)acrylat-funktionelle Verdünnungsmittel aus der Gruppe ausgewählt ist, die aus 1,6-Hexandioldi(meth)acrylat, Tripropylenglycoldi(meth)acrylat, Bisphenol-A-epoxydi(meth)acrylat, Isobornyl (meth)acrylat, 2-(2-Ethoxyethoxy)ethyl(meth)acrylat, Tetrahydrofurfuryl(meth)acrylat, Polyethylenglycoldi (meth)acrylat, N-Vinylformamid, Tripropylenglycoldi (meth)acrylat, Neopentylglycoldialkoxydi (meth) acrylat, Polyethylenglycoldi(meth) acrylat und Gemischen davon besteht.

51. Optische Speicherplatte gemäß Anspruch 50, wobei es sich bei dem (Meth)acrylat-funktionellen Verdünnungsmittel um 1,6-Hexandioldi(meth)acrylat handelt.

52. Optische Speicherplatte gemäß Anspruch 47, wobei das multifunktionelle (Meth)acrylat-Monomer, das drei oder mehr (Meth)acrylat-Gruppen umfaßt, aus der Gruppe ausgewählt ist, die aus Trimethylolpropantri(meth)acrylat, Pentaerythritoltri(meth)acrylat, Pentaerythritoltetra(meth)acrylat, Ditrimethylolpropantri(meth)acrylat, Dipentaerythritolpenta (meth)acrylat, Dipentaerythritolhydroxypenta (meth)acrylat, Trimethylpropantri(meth)acrylat und Gemischen davon besteht.

53. Optische Speicherplatte gemäß Anspruch 52, wobei das multifunktionelle (Meth)acrylat-Monomer, das drei oder mehr (Meth)acrylat-Gruppen umfaßt, aus der Gruppe ausgewählt ist, die aus Trimethylolpropantri(meth)acrylat, Pentaerythritoltetra (meth)acrylat, Glycerylpropoxytri(meth)acrylat, Trimethylolpropantri(meth)acrylat und Gemischen davon besteht.

54. Optische Speicherplatte gemäß Anspruch 47, wobei das multifunktionelle (Meth)acrylat-Oligomer aus der Gruppe ausgewählt ist, die aus Polyester(meth)acrylaten, Polyurethan(meth)acrylaten und Epoxy(meth)acrylaten besteht.

55. Optische Speicherplatte gemäß Anspruch 47, wobei das multifunktionelle (Meth)acrylat-Oligomer aus der Gruppe ausgewählt ist, die aus tetrafunktionellem acrylathaltigem Polyesteroligomer, Polyester-tetrafunktionellem (Meth)acrylat-Oligomer, multifunktionellem (meth)acrylathaltigem Polyesteroligomer, Bisphenol-A-epoxydi (meth)acrylat, trifunktionellem acrylathaltigem Polyesteroligomer, trifunktionellem aromatischem Urethanacrylatoligomer, hexafunktionellem aliphatischem Urethanacrylat, difunktionellem aliphatischem Urethanacrylatoligomer und Gemischen davon besteht.

56. Optische Speicherplatte gemäß Anspruch 47, wobei das multifunktionelle (Meth)acrylat-Oligomer aus der Gruppe ausgewählt ist, die aus Polyester-tetrafunktionellem (Meth)acrylat-Oligomer, multifunktionellem (meth)acrylathaltigem Polyesteroligomer, Bisphenol-A-epoxydi (meth)acrylat und Gemischen davon besteht.

57. Optische Speicherplatte gemäß Anspruch 20, wobei die strahlungshärtbare silikonhaltige Verbindung eine silikonhaltige (Meth)acrylatverbindung ist.

58. Optische Speicherplatte gemäß Anspruch 57, wobei die silikonhaltige (Meth)acrylatverbindung ein Polyoxyalkylensegment umfaßt.

59. Optische Speicherplatte gemäß Anspruch 58, wobei die silikonhaltige (Meth)acrylatverbindung die allgemeine Formel 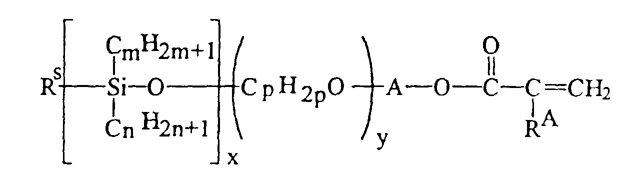 hat, wobei R^{A} Wasserstoff oder eine Methylgruppe ist, R^{S} Wasserstoff oder eine Alkylgruppe ist, A eine hydroxyhaltige zweiwertige Verknüpfungsgruppe ist, x im Bereich von 1 bis 9 liegt, y im Bereich von 1 bis 30 liegt, m, n und p unabhängig im Bereich von 1 bis 10 liegen.

60. Optische Speicherplatte gemäß Anspruch 59, wobei die silikonhaltige (Meth)acrylatverbindung die allgemeine Formel 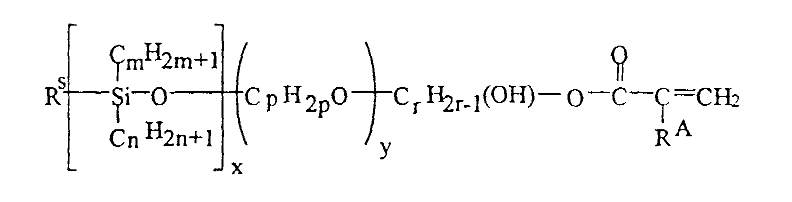 hat, wobei r im Bereich von 1 bis 10 liegt.

61. Optische Speicherplatte gemäß Anspruch 60, wobei die silikonhaltige (Meth)acrylatverbindung die allgemeine Formel 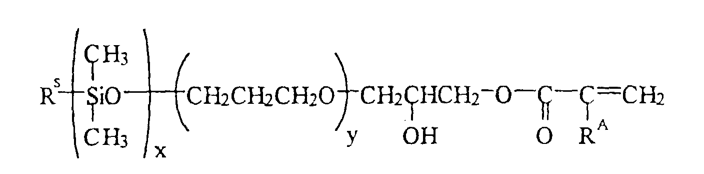 hat.

62. Optische Speicherplatte gemäß Anspruch 61, wobei die silikonhaltige Verbindung die allgemeine Formel 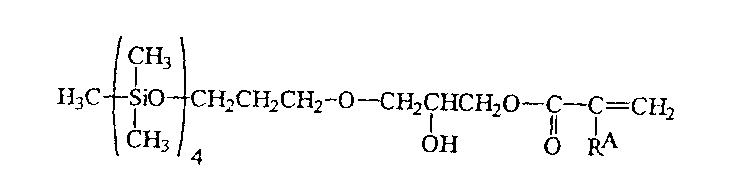 hat.

63. Optische Speicherplatte gemäß Anspruch 20, wobei
es sich bei dem fluorierten ionischen Salz um Lithium-bis (trifluormethylsulfonyl)imid handelt,
die strahlungshärtbare Komponente
1,6-Hexandioldi(meth)acrylat, Trimethylpropantri(meth)acrylat, Bisphenol-A-epoxydi (meth)acrylat, Tripropylenglycoldi(meth)acrylat
umfaßt,
es sich bei dem nichtionischen Perfluortensid um 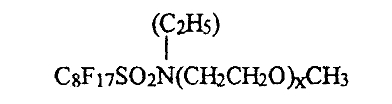 handelt, wobei x im Bereich von etwa 5 bis 8 liegt, und
es sich bei der silikonhaltigen (Meth)acrylatverbindung um Polydimethylsiloxan(meth)acrylat handelt.

64. Gehärtete Zusammensetzung einer antistatischen Beschichtung, die aus Bestandteilen erhalten wird, die
a) ein fluoriertes ionisches Salz mit der allgemeinen Formel 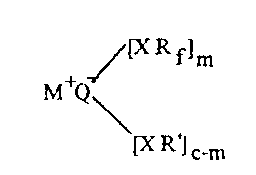
wobei M⁺ ein Kation darstellt, Q⁻ ein Kohlenstoffatom, ein Stickstoffatom oder ein Sauerstoffatom darstellt, jedes X unabhängig eine zweiwertige Verknüpfungsgruppe darstellt, R_{f} eine fluorierte Gruppe darstellt und R' eine einwertige organische Gruppe darstellt und,
wenn Q⁻ Kohlenstoff ist, c 3 ist und m 1 oder 2 oder 3 ist,
wenn Q⁻ Stickstoff ist, c 2 ist und m 1 oder 2 ist und,
wenn Q⁻ Sauerstoff ist, c 1 ist und m 1 ist,
b) eine strahlungshärtbare Komponente,
c) ein nichtionisches Perfluortensid und
d) eine strahlungshärtbare silikonhaltige Verbindung
umfassen.

## Revendications

1. Disque d'enregistrement optique ayant une couche de revêtement antistatique dur déposée sur au moins une surface du disque, dans lequel la couche de revêtement antistatique dur comprend un sel ionique fluoré de formule générale : 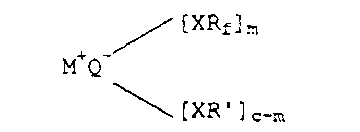 dans laquelle M⁺ représente un cation, Q représente un atome de carbone ou un atome d'azote, chaque X représente indépendamment un groupe de liaison divalent, R_{f} représente un groupe fluoré; et R' représente un groupe organique monovalent; et
lorsque Q est un atome de carbone, c est 3 et m est 1, 2 ou 3; et
lorsque Q est un atome d'azote, c est 2 et m est 1 ou 2.

2. Disque d'enregistrement optique selon la revendication 1, dans lequel Q est un atome de carbone.

3. Disque d'enregistrement optique selon la revendication 1, dans lequel Q est un atome d'azote.

4. Disque d'enregistrement optique selon la revendication 1, dans lequel R' est un groupe alkyle ou aryle, ou un groupe alkyle ou aryle substitué par un atome d'halogène.

5. Disque d'enregistrement optique selon la revendication 1, dans lequel M⁺ est Li⁺.

6. Disque d'enregistrement optique selon la revendication 1, dans lequel R_{f} est CₙF₂ₙ₊₁, où est dans l'intervalle de 1 à 12 environ.

7. Disque d'enregistrement optique selon la revendication 1, dans lequel le sel ionique fluoré est un sel de type bis-(perfluoroalkylsulfonyl)imide.

8. Disque d'enregistrement optique selon la revendication 7, dans lequel le sel ionique fluoré est un lithium bis-(perfluoroalkylsulfonyl)imide.

9. Disque d'enregistrement optique selon la revendication 8, dans lequel le sel ionique fluoré est le lithium bis-(trifluorométhylsulfonyl)imide

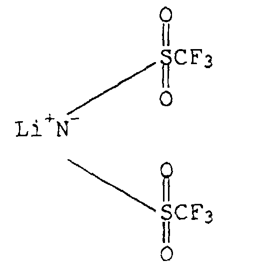

10. Disque d'enregistrement optique selon la revendication 1, dans lequel le sel ionique fluoré est un sel de type tris-(perfluoroalkylsulfonyl)méthide.

11. Disque d'enregistrement optique selon la revendication 10, dans lequel le sel ionique fluoré est un lithium tris-(perfluoroalkylsulfonyl)méthide.

12. Disque d'enregistrement optique selon la revendication 11, dans lequel le sel ionique fluoré est le lithium tris-(trifluorométhylsulfonyl)méthide :

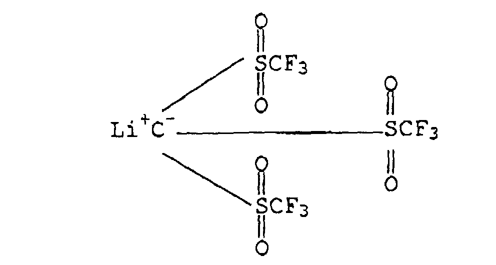

13. Disque d'enregistrement optique selon la revendication 1, dans lequel la couche de revêtement dur comprend en outre un agent tensioactif non ionique fluoré.

14. Disque d'enregistrement optique selon la revendication 13, dans lequel l'agent tensioactif non ionique fluoré comprend un segment polyoxyéthylène.

15. Disque d'enregistrement optique selon la revendication 14, dans lequel l'agent tensioactif non ionique fluoré comprend un groupe perfluoré.

16. Disque d'enregistrement optique selon la revendication 14, dans lequel l'agent tensioactif non ionique perfluoré a la formule :
F₂ₙ₊₁Cₙ(CH₂CH₂O)ₓR⁶
dans laquelle R⁶ est un atome d'hydrogène ou un groupe alkyle, n est dans l'intervalle de 1 à 12, et x est dans l'intervalle de 1 à 50.

17. Disque d'enregistrement optique selon la revendication 15, dans lequel l'agent tensioactif non ionique perfluoré est
F₁₇C₈(CH₂CH₂O)₁₀H

18. Disque d'enregistrement optique selon la revendication 15, dans lequel l'agent tensioactif non ionique perfluoré a la formule :
F₂ₙ₋₁CₙO(CH₂CH₂O)ₓCH₃
dans laquelle x est dans l'intervalle de 10 - 20, et n est dans l'intervalle de 3 à 18.

19. Disque d'enregistrement optique selon la revendication 18, dans lequel l'agent tensioactif non ionique perfluoré est
F₁₇C₉O(CH₂CH₂O)ₓCH₃

20. Disque d'enregistrement optique ayant une couche de revêtement antistatique dur déposée sur au moins une surface du disque, dans lequel la couche de revêtement antistatique dur est une composition durcie obtenue à partir d'ingrédients comprenant
a) un sel ionique fluoré;
b) un composant durcissable sous l'action du rayonnement;
c) un agent tensioactif non ionique perfluoré; et
d) un composé contenant du silicone durcissable sous l'action du rayonnement.

21. Disque d'enregistrement optique selon la revendication 20, dans lequel la composition de revêtement dur après durcissement est obtenue à partir de
a) 1 - 4 parties en poids d'un sel ionique fluoré;
b) 95 - 99 parties en poids d'un composant durcissable sous l'action du rayonnement;
c) 0,5 - 4 parties en poids d'un agent tensioactif non ionique perfluoré; et
d) 0,5 - 5 parties en poids d'un composé contenant du silicone durcissable sous l'action du rayonnement.

22. Disque d'enregistrement optique selon la revendication 20, dans lequel le sel ionique fluoré a la formule générale : 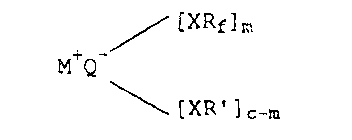 dans laquelle M⁺ représente un cation, Q⁻ représente un atome de carbone, un atome d'azote ou un atome d'oxygène; chaque X représente indépendamment un groupe de liaison divalent, R_{f} représente un groupe fluoré; et R' représente un groupe organique monovalent; et
lorsque Q⁻ est un atome de carbone, c est 3 et m est 1, 2 ou 3;
lorsque Q⁻ est un atome d'azote, c est 2 et m est 1 ou 2; et
lorsque Q⁻ est un atome d'oxygène, c est 1 et m est 1.

23. Disque d'enregistrement optique selon la revendication 22, dans lequel Q est un atome de carbone.

24. Disque d'enregistrement optique selon la revendication 22, dans lequel Q est un atome d'azote.

25. Disque d'enregistrement optique selon la revendication 22, dans lequel Q est un atome d'oxygène.

26. Disque d'enregistrement optique selon la revendication 22, dans lequel R' est un groupe alkyle ou aryle, ou un groupe alkyle ou aryle substitué par un atome d'halogène.

27. Disque d'enregistrement optique selon la revendication 22, dans lequel R_{f} est CₙF₂ₙ₊₁ et dans lequel lorsque Q⁻ est un atome de carbone ou d'azote, n est dans l'intervalle de 1 à 12, et lorsque Q⁻ est un atome d'oxygène, n est dans l'intervalle de 1 à 3.

28. Disque d'enregistrement optique selon la revendication 22, dans lequel M⁺ est Li⁺.

29. Disque d'enregistrement optique selon la revendication 22, dans lequel le sel ionique fluoré est un sel de type bis-(perfluoroalkylsulfonyl)imide.

30. Disque d'enregistrement optique selon la revendication 29, dans lequel le sel ionique fluoré est un lithium bis-(perfluoroalkylsulfonyl)imide.

31. Disque d'enregistrement optique selon la revendication 30, dans lequel le sel ionique est le lithium bis-(trifluorométhylsulfonyl)imide

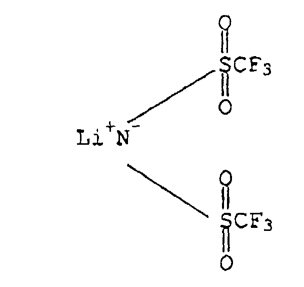

32. Disque d'enregistrement optique selon la revendication 22, dans lequel le sel ionique fluoré est un sel de type tris-(perfluoroalkylsulfonyl)méthide.

33. Disque d'enregistrement optique selon la revendication 32, dans lequel le sel ionique fluoré est un lithium tris-(perfluoroalkylsulfonyl)méthide.

34. Disque d'enregistrement optique selon la revendication 33, dans lequel le sel ionique est le lithium tris-(trifluorométhylsulfonyl)méthide :

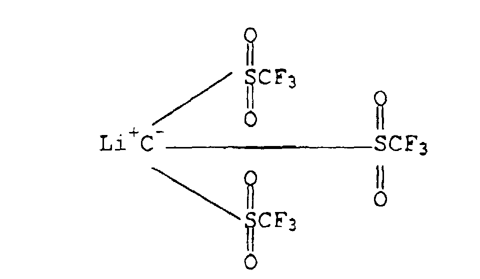

35. Disque d'enregistrement optique selon la revendication 22, dans lequel le sel ionique fluoré est un perfluoroalkylsulfonate.

36. Disque d'enregistrement optique selon la revendication 35, dans lequel le sel ionique fluoré est un perfluoroalkylsulfonate de lithium.

37. Disque d'enregistrement optique selon la revendication 36, dans lequel le sel ionique fluoré est le trifluorométhanesulfonate de lithium

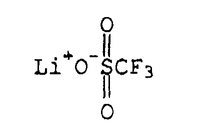

38. Disque d'enregistrement optique selon la revendication 20, dans lequel l'agent tensioactif non ionique perfluoré comprend un segment polyoxyéthylène.

39. Disque d'enregistrement optique selon la revendication 38, dans lequel l'agent tensioactif non ionique perfluoré est
F₂ₙ₊₁Cₙ(CH₂CH₂O)ₓR⁶
formule dans laquelle R⁶ est un atome d'hydrogène ou un groupe alkyle, n est dans l'intervalle de 1 à 12, et x est dans l'intervalle de 1 à 50.

40. Disque d'enregistrement optique selon la revendication 39, dans lequel l'agent tensioactif non ionique perfluoré est
F₁₇C₈(CH₂CH₂O)₁₀H

41. Disque d'enregistrement optique selon la revendication 38, dans lequel l'agent tensioactif non ionique perfluoré a la formule :
F₂ₙ₋₁CₙO(CH₂CH₂O)ₓCH₃
dans laquelle x est dans l'intervalle de 10 - 20, et n est dans l'intervalle de 3 à 18.

42. Disque d'enregistrement optique selon la revendication 41, dans lequel l'agent tensioactif non ionique perfluoré a la formule :
C₉F₁₇O(CH₂CH₂O)ₓCH₃

43. Disque d'enregistrement optique selon la revendication 20, dans lequel l'agent tensioactif non ionique perfluoré a la formule 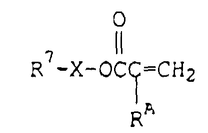 dans laquelle R^{A} est un atome d'hydrogène ou un groupe méthyle, R⁷ est un groupe fluoré, et X est un groupe de liaison divalent.

44. Disque d'enregistrement optique selon la revendication 43, dans lequel l'agent tensioactif non ionique perfluoré a la formule : 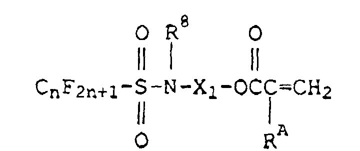 dans laquelle X₁ est un groupe de liaison divalent; R⁸ est un atome d'hydrogène ou un groupe alkyle inférieur ayant de 1 - 12 atomes de carbone; et n est dans l'intervalle de 4 à 16.

45. Disque d'enregistrement optique selon la revendication 44, dans lequel R⁸ est un groupe éthyle ou butyle.

46. Disque d'enregistrement optique selon la revendication 20, dans lequel l'agent tensioactif non ionique perfluoré a la formule 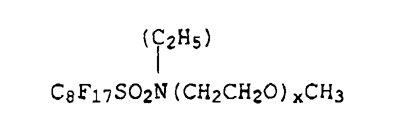 dans laquelle x est dans l'intervalle de 1 à 20.

47. Disque d'enregistrement optique selon la revendication 20, dans lequel le composant durcissable sous l'action du rayonnement comprend
a) un diluant à fonction (méth)acrylate;
b) un monomère (méth)acrylate multifonctionnel comprenant trois groupes (méth)acrylate ou plus; et
c) un oligomère(méth)acrylate multifonctionnel.

48. Disque d'enregistrement optique selon la revendication 47, dans lequel :
le diluant ayant une fonction (méth)acrylate est un monomère (méth)acrylate mono ou difonctionnel non aromatique; et
l'oligomère (méth)acrylate multifonctionnel a une masse moléculaire moyenne en masse dans l'intervalle de 400 à 2000.

49. Disque d'enregistrement optique selon la revendication 48, dans lequel le composant durcissable sous l'action du rayonnement comprend :
a) 20 - 60 parties en poids de diluant ayant une fonction(méth)acrylate;
b) 25 - 55 parties en poids de monomère (méth)acrylate multifonctionnel comprenant trois groupes (méth)acrylate ou plus; et
c) 10 - 30 parties en poids d'oligomère (méth)acrylate multifonctionnel; sur la base de 100 parties de composant durcissable sous l'action du rayonnement.

50. Disque d'enregistrement optique selon la revendication 47, dans lequel le diluant à fonction (méth)acrylate est choisi parmi : le di(méth)acrylate de 1,6-hexanediol, le di(méth)acrylate de tripropylèneglycol, le di(méth)acrylate de bisphénol A époxy, le (méth)acrylate d'isobornyle, le (méth)acrylate de 2-(2-éthoxyéthoxy)éthyle, le (méth)acrylate de tétrahydrofurfuryle, le di(méth)acrylate de polyéthylèneglycol, le N-vinylformamide, le di(méth)acrylate de tripropylèneglycol, le di(méth)acrylate de néopentylglycol dialkoxy, le di(méth)acrylate de polyéthylèneglycol, et les mélanges de ceux-ci.

51. Disque d'enregistrement optique selon la revendication 50, dans lequel le diluant à fonction (méth)acrylate est le di(méth)acrylate de 1,6-hexanediol.

52. Disque d'enregistrement optique selon la revendication 47, dans lequel le monomère (méth)acrylate multifonctionnel comprenant trois groupes (méth)acrylate ou plus est choisi parmi le tri(méth)acrylate de triméthylolpropane, le tri(méth)acrylate de pentaérythritol, le tétra(méth)acrylate de pentaérythritol, le tri(méth)acrylate de ditriméthylolpropane, le pentalméth)acryiate de dipentaérythritol, le penta(méth)acrylate de dipentaérythritol hydroxy, le tri(méth)acrylate de triméthylpropane, et les mélanges de ceux-ci.

53. Disque d'enregistrement optique selon la revendication 52, dans lequel le monomère (méth)acrylate multifonctionnel comprenant trois groupes (méth)acrylate ou plus est choisi parmi le tri(méth)acrylate de triméthylolpropane, le tri(méth)acrylate de pentaérythritol, le tri(méth)acrylate de glycéryl-propoxy, le tri(méth)acrylate de triméthylpropane, et les mélanges de ceux-ci.

54. Disque d'enregistrement optique selon la revendication 47, dans lequel l'oligomère (méth)acrylate multifonctionnel est choisi parmi les (méth)acrylates de polyester, les (méth)acrylates de polyuréthanne, et les (méth)acrylates d'époxy.

55. Disque d'enregistrement optique selon la revendication 47, dans lequel l'oligomère (méth)acrylate multifonctionnel est choisi parmi : un oligomère polyester tétrafonctionnel acrylé, un oligomère (méth)acrylate tétrafonctionnel polyester, un oligomère polyester (méth)acrylé multifonctionnel, un di(méth)acrylate de bisphénol A époxy, un oligomère polyester acrylé trifonctionnel, un oligomère acrylate d'uréthanne aromatique trifonctionnel, un acrylate d'uréthanne aliphatique hexafonctionnel, un oligomère acrylate d'uréthanne aliphatique difonctionnel, et les mélanges de ceux-ci.

56. Disque d'enregistrement optique selon la revendication 47, dans lequel l'oligomère (méth)acrylate multifonctionnel est choisi parmi : un oligomère (méth)acrylate polyester tétrafonctionnel, un oligomère polyester (méth)acrylé multifonctionnel, un di(méth)acrylate de bisphénol A époxy, et les mélanges de ceux-ci.

57. Disque d'enregistrement optique selon la revendication 20, dans lequel le composé contenant le silicone durcissable sous l'action du rayonnement est un composé (méth)acrylate contenant du silicone.

58. Disque d'enregistrement optique selon la revendication 57, dans lequel le composé (méth)acrylate contenant du silicone comprend un segment polyoxyalkylène.

59. Disque d'enregistrement optique selon la revendication 58, dans lequel le composé (méth)acrylate contenant du silicone a la formule générale 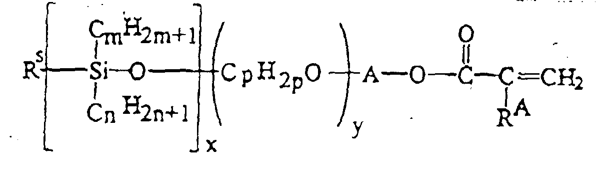 dans laquelle R^{A} est un atome d'hydrogène ou un groupe méthyle, R^{S} est un atome d'hydrogène ou un groupe alkyle, A est un groupe de liaison divalent contenant des groupes hydroxy, x est dans l'intervalle de 1 - 9, y est dans l'intervalle de 1 - 30, m, n, et p, sont indépendamment dans l'intervalle de 1 à 10.

60. Disque d'enregistrement optique selon la revendication 59, dans lequel le composé (méth)acrylate contenant du silicone a la formule générale 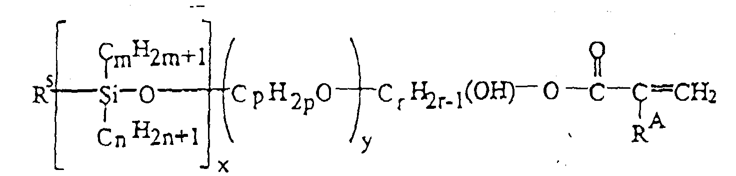 dans laquelle r est dans l'intervalle de 1 à 10.

61. Disque d'enregistrement optique selon la revendication 60, dans lequel le composé (méth)acrylate contenant du silicone a la formule générale

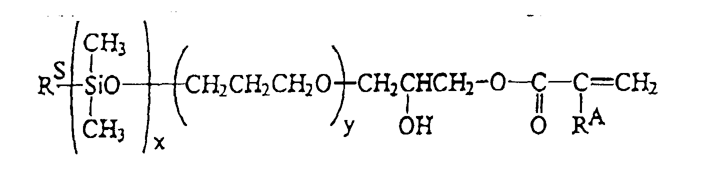

62. Disque d'enregistrement optique selon la revendication 61, dans lequel le composé contenant du silicone a la formule générale

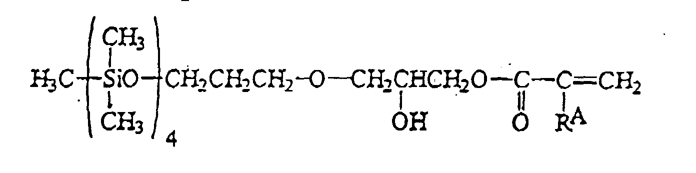

63. Disque d'enregistrement optique selon la revendication 20, dans lequel :
le sel ionique fluoré est le lithium bis(trifluorométhylsulfonyl)imide;
le composant durcissable sous l'action du rayonnement comprend :
le di(méth)acrylate de 1,6-hexanediol,
le tri(méth)acrylate de triméthylolpropane,
le di(méth)acrylate de bisphénol A époxy,
le di(méth)acrylate de tripropylèneglycol;
l'agent tensioactif perfluoré non ionique est : 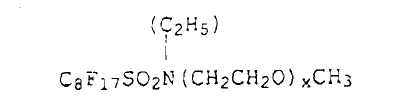 dans laquelle x est dans l'intervalle d'environ 5 à 8; et
le composé (méth)acrylate contenant du silicone est le poly(méth)acrylate de diméthylsiloxane.

64. Composition de revêtement antistatique durcie obtenue à partir d'ingrédients comprenant
a) un sel ionique fluoré ayant la formule générale : 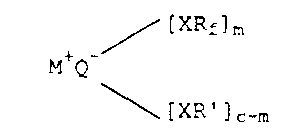
dans laquelle M⁺ représente un cation, Q⁻ représente un atome de carbone, un atome d'azote, ou un atome d'oxygène; chaque X représente indépendamment un groupe de liaison divalent, R_{f} représente un groupe fluoré; et R' représente un groupe monovalent non fluoré; et
lorsque Q⁻ est un atome de carbone, c est 3 et m est 1, 2 ou 3;
lorsque Q⁻ est un atome d'azote, c est 2 et m est 1 ou 2; et
lorsque Q⁻ est un atome d'oxygène, c est 1 et m est 1;
b) un composant durcissable sous l'action du rayonnement;
c) un agent tensioactif perfluoré non ionique; et
d) un composé contenant du silicone durcissable sous l'action du rayonnement.
